# EUROPEAN PATENT SPECIFICATION

(11) **EP 3 375 243 B1**
(45) Date of publication and mention of the grant of the patent: **11.08.2021**
(21) Application number: 15908392.2
(22) Date of filing: 09.11.2015
(51) Int. Cl.: H04W 74/00, H04W 74/08

(54) **FIRST NETWORK NODE, WIRELESS DEVICE, AND METHODS THEREIN, FOR HANDLING A REQUEST FOR ACCESS IN A WIRELESS COMMUNICATIONS NETWORK**
ERSTER NETZWERKKNOTEN, DRAHTLOSE VORRICHTUNG UND VERFAHREN ZUR BEHANDLUNG EINER ZUGRIFFSANFORDERUNG IN EINEM DRAHTLOSKOMMUNIKATIONSNETZWERK
PREMIER NOEUD DE RÉSEAU, DISPOSITIF SANS FIL, ET PROCÉDÉS ASSOCIÉS, POUR LA PRISE EN CHARGE D'UNE REQUÊTE D'ACCÈS DANS UN RÉSEAU DE COMMUNICATIONS SANS FIL

(43) Date of publication of application: 19.09.2018
(73) Proprietor: Telefonaktiebolaget LM Ericsson (publ), 164 83 Stockholm (SE)
(72) Inventor: YILMAZ, Osman Nuri Can, 02280 Espoo (FI); RAMOS, Edgar, 02400 Kirkkonummi (FI); FRENGER, Pål, 583 34 Linköping (SE); MYHRE, Elena, 177 70 Järfälla (SE); ERIKSSON, Erik, 585 93 Linköping (SE)
(74) Representative: Zacco Sweden AB
(86) International application number: PCT/SE2015/051184
(87) International publication number: WO 2017/082777

(56) References cited:
- WO-A1-2011/153701
- WO-A1-2013/063597
- WO-A1-2015/019044
- WO-A2-2015/019295
- WO-A2-2015/019295
- US-A- 5 386 457
- US-A1- 2013 182 611
- US-A1- 2015 173 074
- '5G - key component of the Networked Society' 3GPP DRAFT; RWS-150009; 03 September 2015, PHOENIX, AZ, USA, page 44, XP051043613

## Description

### TECHNICAL FIELD

The present disclosure relates generally to a first network node and methods therein for handling a request for access from a wireless device. The present disclosure also relates generally to a wireless device and methods therein for receiving a response from the first network node to the request for access. The present disclosure further relates generally to a second radio node and methods therein for obtaining a first indication from the communication device. Embodiments herein further relate to computer programs and computer-readable storage mediums, having stored thereon the computer programs to carry out these methods.

### BACKGROUND

Communication devices such as terminals are also known as e.g. User Equipments (UEs), wireless devices, mobile terminals, wireless terminals and/or mobile stations. Wireless devices are enabled to communicate wirelessly in a cellular communications network or wireless communication system, sometimes also referred to as a cellular radio system or cellular networks. The communication may be performed e.g. between two wireless devices, between a wireless device and a regular telephone and/or between a wireless device and a server via a Radio Access Network (RAN) and possibly one or more core networks, comprised within the cellular communications network.

Wireless devices may further be referred to as mobile telephones, cellular telephones, laptops, or surf plates with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another wireless device or a server.

The cellular communications network covers a geographical area which is divided into cell areas, wherein each cell area being served by an access node such as a Base Station (BS), e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the wireless devices within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3^{rd} Generation Partnership Project (3GPP) Long Term Evolution (LTE), base stations, which may be referred to as Evolved Nodes B (eNodeBs) or even eNBs, may be directly connected to one or more core networks.

3GPP LTE radio access standard has been written in order to support high bitrates and low latency both for uplink and downlink traffic. All data transmission is in LTE controlled by the radio base station.

During initial access, a wireless device may seek access to the network in order to register and commence services. The Random Access (RA) may serve as an UL control procedure to enable the wireless device to access the network. Since the initial access attempt may not be scheduled by the network, the RA procedure is by definition contention based. That is, more than one wireless device may random access within a single radio resource, to synchronize with and/or access to the network. Yet, typically the network may only grant an access to only one of the wireless devices at a time, as the same resource is used. Since RA takes place before the network may know of the presence of the wireless devices, the network may not allocate dedicated resources, but a shared access resource may be assigned to all wireless devices to use for RA. Collisions may occur if two wireless devices use the resource at the same time and an appropriate contention-resolution scheme may need to be implemented. Including user data on the contention-based UL may not be spectrally efficient due to the need for guard periods and retransmissions. Therefore, it has been decided to separate the transmission of the random access burst, preamble, whose purpose is to obtain uplink synchronization, from the transmission of user data.

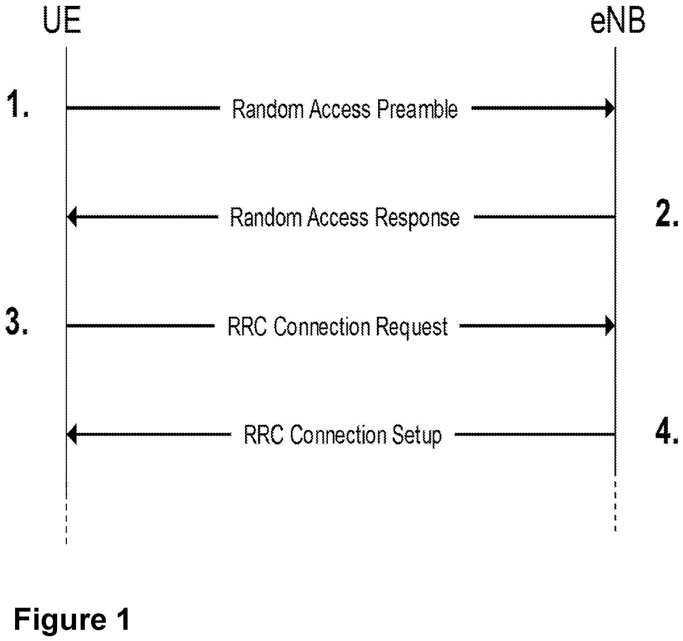

The basic RA Procedure is a four-phase procedure as outlined in Figure 1. Figure 1 is a schematic diagram of the RA procedure described in e.g., 3GPP TS 36.321 Medium Access Control (MAC) protocol specification. At 1, the wireless device, a UE, in the example represented in the figure, sends a Random Access Preamble, to a network node, an eNB in the example depicted in the figure. The Random Access Preamble may be understood as a sequence from the set of sequences available in the cell. For instance, the preamble selection may be a shift in the Zadoff-Chu code for the cell. This transmission may carry or not carry any data bits. In case of LTE, there is no data transmitted within the RA. At 2, the eNB responds by sending a Random Access Response (RAR). After receiving the RAR, the UE sends a Radio Resource Control (RRC) Connection Request to the eNB, which at 4, responds by sending RRC Connection Setup message.

In one of the possible Random Access Channel (RACH) implementations for 5G systems, such as that described in WO2012/039650, RACH is not assumed to be "node specific" and several nodes may use the same RACH configuration. The RACH configuration may be understood as the timing of RACH, preamble format etc. In LTE, the RACH Configuration is in SIB2, as described e.g., in 3GPP 36.331. This means that a random access request transmitted from one wireless device may be received by several nodes. Small cell deployment scenarios may be affected more easily by this, as more than one cell may hear the wireless device. A small cell deployment may be understood as a set of network nodes with lower output power than wide area covering nodes. Small cells may be usually deployed to enhance the capacity in hotspots and indoor areas. They may also be used to extend the coverage e.g., by means of relaying. In case of small cell deployments, it may be more likely to have multiple cells that may decode the uplink transmission e.g., random access attempt, from a wireless device, since in small cell deployments, there may be more cells in the vicinity of a wireless device due to the densification. Thus, the amount of system information may be reduced and efficient small cell sleep and Discontinuous Transmission (DTX) may be provided. For example, if a group of cells uses the same configuration, not all may have to broadcast the same configuration information, one cell may inform for other cells, while the other cells may sleep. Similarly if many cells have the same configuration, if one is at sleep, others may hear the RA of the UE. Small cells, or in this case small nodes, may not need to be active if there is no traffic under them. The only reason why they may need to be active may be in order to grant access to new users. But, if that is taken care by umbrella "cells", then the small cells or nodes may be in an efficient sleep until the umbrella cells may make them wake up to take care of incoming users. In addition, RAR may be assumed to be self-contained, carrying its own radio signals, e.g. pilot and sync, that may be used by the network to provide synchronization and/or points of reference, such as power levels, to the terminals, and in some cases vice versa, and sent independently by the network nodes.

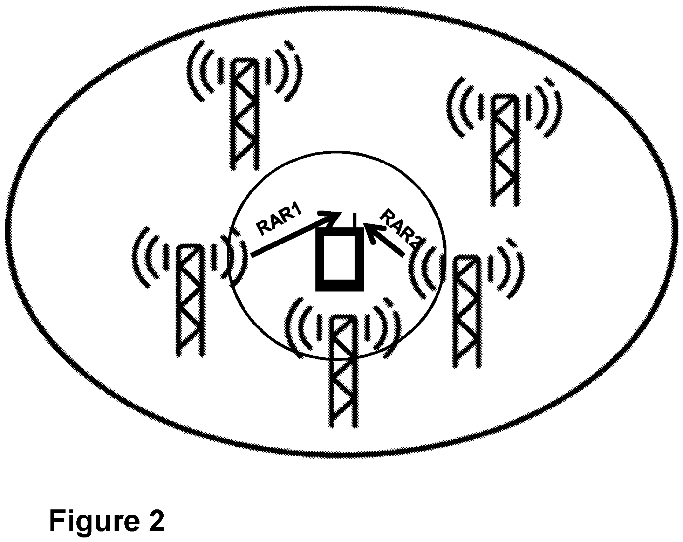

When non-node-specific RACH is deployed, the UE may receive multiple random access responses if the random access attempt is successfully received by more than one radio network node, as shown in the schematic diagram of **Figure 2****,** which illustrates non node-specific RACH. In the particular example depicted in this figure, the UE receives a RAR (RAR1) from one network node and another RAR (RAR2) from another network node. The problem then arises of which node the wireless device should connect to, the so called multiple RAR resolution.

In existing methods, multiple RAR resolution has been proposed to be handled either based on "inter node coordination" on the network side or "contention resolution" on the UE side. However, either approach has its own drawbacks. In case of network coordination for RAR contention resolution, network signalling overhead may increase. Furthermore, backhaul limitations may be a notable challenge, especially for certain applications, due to latency and capacity. In case of UE processing for the RAR selection, then the drawbacks may be the energy-consumption, due to processing, on the UE side and less network traffic steering control, meaning that the network may not be able to decide which network node a UE should attach to first.

Yet another problem in existing methods is that transmitting more RAR messages than necessary causes additional interference which degrades performance.

WO 2015/019295 A2 describes a method of operating a mobile station requesting an uplink access from a base station subsystem.

Further, WO 2015/019044 A1 describes a communication system for transmitting data between a user device and an infrastructure equipment.

### SUMMARY

The invention is defined by the independent claims. Furthermore, embodiments of the invention are defined by the claims. Moreover, examples, aspects and embodiments, which are not covered by the claims are presented not as embodiments of the invention, but as background art or examples useful for understanding the invention. It is an object of embodiments herein to improve the handling of a request for access from a wireless device by a network node. It is a further object of embodiments herein to improve the procedure of accessing the network by a wireless device.

According to a first aspect of embodiments herein, the object is achieved by a method performed by a first network node for handling a request for access from a wireless device, the wireless device and the first network node operating in a wireless communications network, the method comprising: receiving a first message from the wireless device comprising a request for access, determining a delay for sending a second message to the wireless device, in response to the received first message, by setting a certain priority in a scheduler of the first network node, wherein the delay is determined based on a preconfigured delay timer, and wherein the preconfigured delay timer is a table that provides the determined delay based on one or more input values, sending the second message to the wireless device using said determined delay, the second message comprising a response to the request for access, wherein the second message further comprises one or more fourth indications for at least one of: a) a condition of a radio channel between the first network node and the wireless device, b) a load in a first cell served by the first network node, c) a load in the first network node, d) a capability of the first network node, and e) an indication of a maximum delay by the wireless device to send a third message to the first network node in response to the second, and sending a fourth message to a second network node, the fourth message comprising a third indication that the second message has been sent by the first network node to the wireless device, wherein the second network node is a neighbor network node.

According to a second aspect of embodiments herein, the object is achieved by a method performed by a wireless device for receiving a response from a first network node to a request for access, the wireless device and the first network node operating in a wireless communications network, the method comprising: obtaining a first indication indicating a delay used by the first network node for sending a response to a request for access, receiving, from the first network node, a second message comprising the response to the request for access comprised in a first message sent by the wireless device, the receiving being based on the delay, wherein the second message comprises one or more fourth indications for at least one of: a) a condition of a radio channel between the first network node and the wireless device, b) a load in a first cell served by the first network node, c) a load in the first network node, d) a capability of the first network node, and e) an indication of a maximum delay by the wireless device to send a third message to the first network node in response to the second message, receiving, from a second network node, a fifth message granting the request for access to a second cell served by the second network node, wherein the second network node is neighbor network node of the first network node, and determining, whether to send one of: i) a third message to the first network node in response to the second message, or ii) a sixth message to the second network node in response to the fifth message, the determining whether to send the third message being based on at least one of the following: one or more fourth indications comprised in the received second message from the first network node and a time of receipt of the second message, and the determining whether to send the sixth message being based on at least one of the following: one or more fifth indications comprised in the received fifth message from the second network node, and a time of receipt of the fifth message, wherein the one or more fifth fifths indications are for at least one of the following: a condition of a radio channel between the second network node and the wireless device, a load in a second cell served by the second network node, and a capability of the second network node.

According to a third aspect of embodiments herein, the object is achieved by a first network node configured to handle a request for access from a wireless device, the first network node being configured to operate in a wireless communications network, the first network node being further configured to: receive a first message from the wireless device comprising a request for access, determine a delay for sending a second message to the wireless device, in response to the received first message, by setting a certain priority in a scheduler of the first network node, wherein the delay is determined based on a preconfigured delay timer, and wherein the preconfigured delay timer is a table that provides the determined delay based on one or more input values, send the second message to the wireless device using said determined delay, the second message comprising a response to the request for access, wherein the second message comprises one or more fourth indications for at least one of: a) a condition of a radio channel between the first network node and the wireless device, b) a load in a first cell served by the first network node, c) a load in the first network node, d) a capability of the first network node, and e) an indication of a maximum delay by the wireless device to send a third message to the first network node in response to the second message, and send a fourth message to a second network node, the fourth message comprising a third indication that the second message has been sent by the first network node to the wireless device, wherein the second network node is a neighbor network node.

According to a fourth aspect of embodiments herein, the object is achieved by a wireless device configured to receive a response from a first network node to a request for access, the wireless device being configured to operate in a wireless communications network, the wireless device being further configured to: obtain a first indication indicating a delay configured to be used by the first network node for sending a response to a request for access, and receive, from the first network node, a second message comprising the response to the request for access comprised in a first message configured to be sent by the wireless device, to receive being based on the delay, wherein the second message comprises one or more fourth indications for at least one of: a) a condition of a radio channel between the first network node and the wireless device, b) a load in a first cell served by the first network node, c) a load in the first network node, d) a capability of the first network node, and e) an indication of a maximum delay by the wireless device to send a third message to the first network node in response to the second message, receive from a second network node, a fifth message granting the request for access to a second cell served by the second network node, wherein the second network node is a neighbor network node of the first network node, and determine whether to send one of: i) a third message to the first network node in response to the second message, or ii) a sixth message to the second network node in response to the fifth message, the determining whether to send the third message being based on at least one of the following: one or more fourth indications comprised in the received second message from the first network node and a time of receipt of the second message, and the determining whether to send the sixth message being based on at least one of the following: one or more fifth indications comprised in the received fifth message from the second network node, and a time of receipt of the fifth message, wherein the one or more fifth fifths indications are for at least one of the following: a condition of a radio channel between the second network node and the wireless device, a load in a second cell served by the second network node, and a capability of the second network node.

According to a fifth aspect of embodiments herein, the object is achieved by a computer program, comprising instructions which, when executed on at least one processor, cause the at least one processor to carry out the method performed by the first network node.

According to a sixth aspect of embodiments herein, the object is achieved by a computer-readable storage medium, having stored thereon the computer program, comprising instructions which, when executed on at least one processor, cause the at least one processor to carry out the method performed by first the network node.

According to a seventh aspect of embodiments herein, the object is achieved by a computer program, comprising instructions which, when executed on at least one processor, cause the at least one processor to carry out the method performed by the wireless device.

According to an eighth aspect of embodiments herein, the object is achieved by a computer-readable storage medium, having stored thereon the computer program, comprising instructions which, when executed on at least one processor, cause the at least one processor to carry out the method performed by the wireless device.

By the first network node determining the delay for sending the response to the request for access from the wireless device, and sending the response using the determined delay, the network node is able to steer the initial access of the wireless device towards a specific network node, either itself or another network node. The signalling overhead associated with the network coordination is reduced or removed on both the network node and the wireless device. Therefore, both benefit from the proactive conflict resolution. The wireless device processing and energy-consumption may be lowered. In consequence, the overall capacity of the wireless communications network is increased, and the latency reduced, increasing the efficiency of the communications within the wireless communications network.

### BRIEF DESCRIPTION OF THE DRAWINGS

Examples of embodiments herein are described in more detail with reference to the accompanying drawings, in which:
Figure 1 is a schematic diagram illustrating a random access procedure in case of initial access, according to existing methods.
Figure 2 is a schematic diagram illustrating non node-specific RACH, according to existing methods.
Figure 3 is a schematic diagram illustrating a wireless communications network, according to some embodiments.
Figure 4 is a schematic diagram illustrating embodiments of a method in a first network node, according to some embodiments.
Figure 5 is a schematic diagram illustrating embodiments of a method in a wireless device, according to some embodiments.
Figure 6 is a schematic diagram illustrating embodiments of a method in a wireless communications network, according to some embodiments.
Figure 7 is a schematic diagram illustrating embodiments of a method in a wireless communications network, according to some embodiments.
Figure 8 is a schematic diagram illustrating embodiments of a method in a wireless communications network, according to some embodiments.
Figure 9 is a block diagram illustrating embodiments of a first network node, according to some embodiments.
Figure 10 is a block diagram illustrating embodiments of a wireless device, according to some embodiments.

### DETAILED DESCRIPTION

Embodiments will now be described more fully hereinafter with reference to the accompanying drawings, in which examples of the claimed subject matter are shown. The claimed subject matter may, however, be embodied in many different forms and should not be construed as limited to the embodiments set forth herein. Rather, these embodiments are provided so that this disclosure will be thorough and complete, and will fully convey the scope of the claimed subject matter to those skilled in the art. It should also be noted that these embodiments are not mutually exclusive. Components from one embodiment may be tacitly assumed to be present/used in another embodiment.

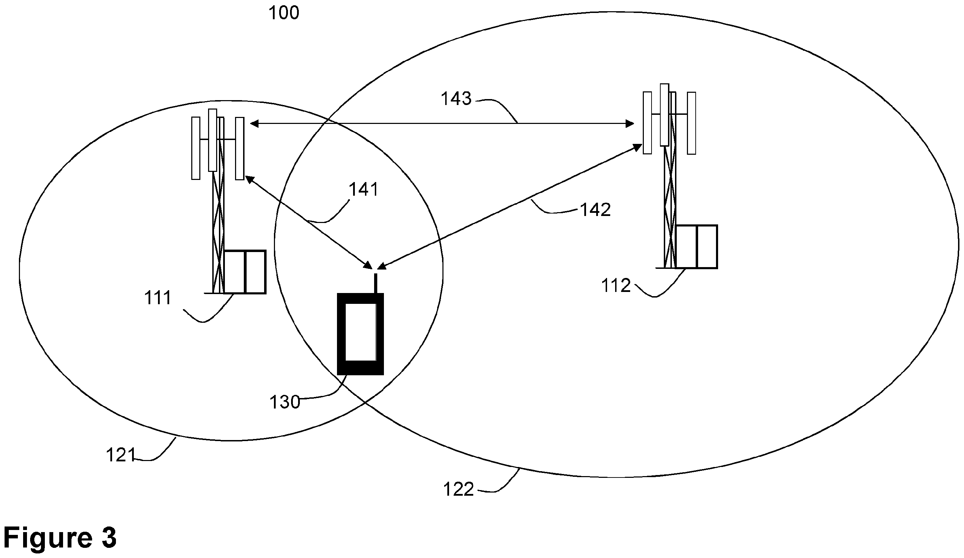

**Figure 3** depicts a **wireless communications network 100,** sometimes also referred to as a cellular radio system, cellular network or wireless communications system, in which embodiments herein may be implemented. The wireless communications network 100 may for example be a network such as a Long-Term Evolution (LTE), e.g. LTE Frequency Division Duplex (FDD), LTE Time Division Duplex (TDD), LTE Half-Duplex Frequency Division Duplex (HD-FDD), LTE operating in an unlicensed band, Wideband Code Division Multiple Access (WCDMA), Universal Terrestrial Radio Access (UTRA) TDD, Global System for Mobile communications (GSM) network, GSM/Enhanced Data Rate for GSM Evolution (EDGE) Radio Access Network (GERAN) network, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, WiFi networks, Worldwide Interoperability for Microwave Access (WiMax), 5G system or any cellular network or system. Thus, although terminology from 3GPP LTE may be used in this disclosure to exemplify embodiments herein, this should not be seen as limiting the scope of the embodiments herein to only the aforementioned system.

The wireless communications network 100 comprises a **first network node 111** and a **second network node 112.** Each of the first network node 111 and the second network node 112 may be a base station such as e.g. an eNB, eNodeB, or a Home Node B, a Home eNode B, femto Base Station, BS, or any other network unit capable to serve a wireless device or a machine type communication device in the wireless communications network 100. Each of the first network node 111 and the second network node 112 may be e.g. macro eNodeB, or pico base station, based on transmission power and thereby also cell size. In some particular embodiments, any of the first network node 111 and the second network node 112 may be a stationary relay node or a mobile relay node. The wireless communications network 100 covers a geographical area which may be divided into cells, wherein each cell is served by a network node, although, one network node may serve one or several cells. In the example depicted in Figure 3, the first network node 111 serves a **first cell 121** and the second network node 112 serves a **second cell 122.** Typically, the wireless communications network 100 may comprise more cells similar to the first cell 121 and the second cell 122, served by their respective network nodes. This is not depicted in Figure 3 for the sake of simplicity. Each of the first network node 111 and the second network node 112 may support one or several communication technologies, and its name may depend on the technology and terminology used.

A number of wireless devices are located in the wireless communications network 100. In the example scenario of Figure 3, only one wireless device is shown. The wireless device 130 is a wireless communication device such as a UE which is also known as e.g. mobile terminal, wireless terminal and/or mobile station, a mobile telephone, cellular telephone, or laptop with wireless capability, just to mention some further examples. The wireless device 130 may be, for example, portable, pocket-storable, hand-held, computer-comprised, or vehicle-mounted mobile devices, enabled to communicate voice and/or data, via the RAN, with another entity, such as a server, a laptop, a Personal Digital Assistant (PDA), or a tablet computer, sometimes referred to as a surf plate with wireless capability, Machine-to-Machine (M2M) devices, devices equipped with a wireless interface, such as a printer or a file storage device, modems, or any other radio network unit capable of communicating over a radio link in a cellular communications system. The wireless device 130 is wireless, i.e., it is enabled to communicate wirelessly in the wireless communication network 100. The communication may be performed e.g., between two devices, between a device and a regular telephone and/or between a device and a server. The communication may be performed e.g., via a RAN and possibly one or more core networks, comprised within the wireless communications network 100.

The wireless devices 130 may communicate within the wireless communications network 100 with the first network node 111 over a **first radio link 141,** and with the second network node 112 over a **second radio link 142.** The first network node 111 may communicate with the second network node 112 over a third link 143, which may be a radio link or a wired link.

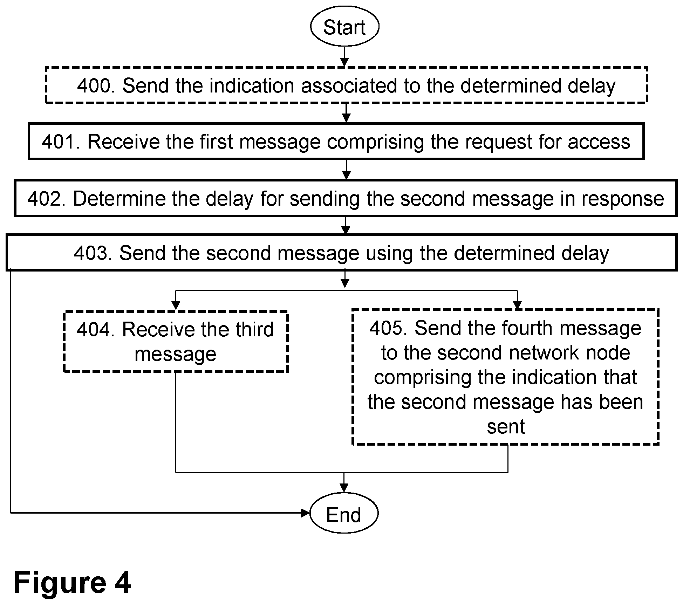

Embodiments of a method performed by the first network node 111 for handling a request for access from the wireless device 130, will now be described with reference to the flowchart depicted depicted in **Figure 4****.** The wireless device 130 and the first network node 111 operate in the wireless communications network 100.

The method may comprise the following actions, which actions may as well be carried out in another suitable order than that described below.

### Action 400

Embodiments herein may be understood as relating to the problem that arises when more than one network node, in this case, the first network node 111 and the second network node 112, receives a first message from same wireless device 130, the first message comprising a request for access. Since the wireless device 130 may only access one network node at a time, the question may arise as to which network node the wireless device 130 may access.

According to embodiments herein, as will be described below in Action 402, at least part of the access request conflict resolution may be performed on the transmitter side, that is, on the side of the first network node 111 by means of determining a delay for the transmission of a second message comprising a response to the first message comprising the request for access from the wireless device 130. The delay as determined in Action 402 may be referred to herein as the "determined delay", that is, the delay to be determined in Action 402.

In some embodiments, in this action, the first network node 111 may send to the wireless device 130, at least one of a first indication associated to the determined delay and a second indication associated to the determined delay. The first indication may comprise an indication of a maximum delay by the first network node 111 to send the second message. The second indication may comprise an indication of a maximum delay by the wireless device 130 to send a third message to the first network node 111 in response to the second message.

Any of the indications described herein may be understood to refer to e.g., a number representing a quantitative value or a code representing a qualitative value. The units and characteristics of each of the indications described herein may be understood to vary depending on the information that is being indicated, as may be understood by one of skill in the art. For example here, the first or second indications may be expressed as a number of µs.

By the first network node 111 sending the first indication to the wireless device 130, the wireless device 130 may be enabled to determine when it may not expect to receive a second message from the first network node 111. The wireless device 130 may then assume that the RA attempt failed, or that the first network node 111 may be able to respond to it, or perhaps no other network node within the area receiving the first indication may be able to respond to it. The wireless device 130 may therefore be enabled to opt to send a new first message comprising a new request for access to the first network node 111, or may opt to send a response to the fifth message received from the second network node 112.

By the first network node 111 sending the second indication to the wireless device 130, the wireless device 130 may be enabled to determine when it may no longer delay sending a third message to the first network node 111 in response to the second message received from the first network node 111, if the wireless device 130 wants to connect to the wireless communications network 100 through it. Otherwise, the first network node 111 may assume that the second message did not reach the wireless device 130, or that the wireless device 130 responded to another network node, unless the first network node 111 already detected that the wireless device 130 had responded to second network node 112.

This Action 400 may be implemented by the first network node 111 broadcasting system information, e.g., via the first radio link 141, informing the wireless device 130 in advance on the maximal preconfigured delay, also referred to herein as maximal preconfigured backoff time, that is, the maximum RAR response time of the first network node 111.

This action is optional.

### Action 401

When the wireless device 130 may want to access the wireless communications network 100, the wireless device 130 may do so by trying to access the first network node 111. Therefore, in this Action, the first network node 111 receives a first message from the wireless device 130 comprising a request for access, e.g., via the first radio link 141. A request for access may be understood as a request for access to resources in order for the wireless device 130 to send or receive data with the first network node 111, and/or a request for uplink synchronization, e.g., for estimating the timing advance for OFDM communication in the uplink. The first message may also be referred to herein as "Message 1". For example, in LTE, Action 401 may be implemented by receiving a Random Access Preamble, as described in relation to Figure 1.

### Action 402

In this action, the first network node 111 determines a delay for sending a second message to the wireless device 130 in response to the received first message. A delay may also be understood as a reply time, a RAR response time or a backoff time. This Action may be implemented by the first network node 111 calculating itself or generating the delay, or by the first network node 111 obtaining or receiving the delay or a measure that may be used for calculating delay from another network node in the wireless communications network 100. For example, in some embodiments, the first network node 111 may be implemented as a distributed node, and this Action may be implemented through a Cloud service in the another node.

In some embodiments, the first network node 111 may determine the delay for sending the second message to the wireless device 130 by generating a delay based on a preconfigured delay timer. The preconfigured delay timer may be, for example, a table that provides the determined delay, based on one or more input values, e.g., a condition of a channel, a load, etc..., as described below. The preconfigured delay timer may also be a fixed value per cell, e.g., the first cell 121. The preconfigured delay timer may also be referred to herein as preconfigured backoff timer.

The arbitrary nomenclature first message, second message, third message, fourth message and sixth message, is used herein. It will be understood that this nomenclature is used to refer to different types of messages, e.g., requests or responses, and the nodes they are exchanged, from one network node to the wireless device and vice versa. That is, it will be understood that this nomenclature is used to distinguish among different messages exchanged between the wireless device 130 and the first network node 111 and/or the second network node 112, and it does not imply any particular order of occurrence of these messages, or their actual occurrence. For example, the second message from the first network node 111 to the wireless device 130 may be distinguished from another second message, e.g., another Message 2, from the second network node 112 to the wireless device 112 which may be referred to herein as a fifth message. However, it should be understood that the reference to a fifth message does not necessarily imply the occurrence of a fourth message and/or a third message and/or a second message.

The determining 402 may be based on a number of factors. In some embodiments, the determining 402 may be based on a condition of a radio channel between the first network node 111 and the wireless device 130. The radio channel may be understood herein as the medium where the data or control information may be physically conveyed in time, frequency, and code domains. The condition of the radio channel may be based on e.g., Reference Signal Received Power (RSRP), Reference Signal Received Quality (RSRQ), Signal-to-Noise Ratio (SNR), Signal-to-Noise-plus-Interference Ratio (SINR) etc... For example, in a particular example, the delay may be determined in inverse proportion to the received condition of the radio channel. When the condition of the radio channel is used as the criterion to determine the delay, farther nodes may have a larger delay for those links farther away or with the worst condition of the radio channel. In this case, if another random access attempt with a same RACH resource is detected during the delay, the wireless device that is closer may be prioritized for the channel access, even though its attempt may have been received later with respect to the farther wireless device.

The determining 402 may be based on a load in the first cell 121 served by the first network node 111 and/or on a load in the first network node 111, such as a relative load with respect to the load in the first network node 111 and the load of neighboring cells/nodes. The load in a cell, e.g., the first cell 121, may be understood herein as e.g., radio resources, such as RRM resources, and maximum interference tolerated. The load in a network node, e.g., the first network node 111 may be understood herein as being related to a hardware limitation in the network node, e.g., Central Processing Unit (CPU) load or capacity of the trunk exchanges.

In a particular example, the delay may be determined in direct proportion to the load. When the load is used as the delay criterion, this may mean that overloaded nodes may have a larger reply time or delay. This delay may also be used by the first network node 111 in order to have more processing time to deal with the wireless devices that may be trying to access the first network node 111 when it is overloaded, but that the overloaded first network node 111 may not want to accept. For instance, data resources may be allocated, e.g., by traffic steering other wireless devices, or generated, e.g., activating another antenna or requesting additional resource from another network node.

The embodiments wherein the determining 402 may be based on the condition of the radio channel or the load in the first cell 121 and/or in the first network node 111, may be combined. In either of these embodiments, the RAR collision/contention may be avoided on the wireless device 130 side, since the wireless device 130 may simply reply to the network node the wireless device 130 receives the first RAR from. In addition, the load balancing and/or coverage optimization, e.g., for the uplink, may be provided. Load balancing may be understood as referring to the fact that the network load may be balanced proactively, e.g., network nodes with low load may grant the access earlier than other network nodes with higher load.

In some embodiments, the determining 402 may be based randomly, that is, on a random determination. In such embodiments, the second message, e.g., Message 2 or RAR, may be sent with a delay by each network node that may have received the first message as in the previous embodiments. Yet, the delay may be randomly generated without taking the received condition of the radio channel and/or load into account. Also thanks to these embodiments, the wireless device 130 may be allowed to not need to have the RAR contention resolution on its side. The wireless device 130 may send a third message in response, e.g. Message 3 or L2/L3 message, to the network node, whichever the wireless device 130 receives the first RAR from.

This may be particularly applicable to the context of a small cell deployment, wherein the second message, e.g., Message 2 or RAR, may be sent by each small cell with a random delay timer. The wireless device 130 may send a third message in response, e.g. Message 3 or L2/L3 message, to, whichever small cell in the deployment the wireless device 130 receives the first RAR from or it may take into account other factors, as described below in relation to Action 506.

In some embodiments, the determining 402 may be based on one or more capabilities of the wireless device 130. A capability of the wireless device 130 may be understood herein as antenna or processing capacities, e.g. feature support, beamforming capabilities, data rate, interference cancellation, etc.... For example, , with beamforming, there may be a limitation of how many beams or the type of beams that may be produced and this may be used to rank accesses depending on e.g., what type of device the wireless device 130 that is trying to access the network may be.

In some situations the first network node 111 may determine that the delay is indefinite, because it may choose to not send any RAR at all, e.g. if it is highly likely that the wireless device 130 may be better served by another node in the wireless communications network 100. By determining that the delay is indefinite and not sending an unnecessary RAR, the interference level and resource utilization may be reduced slightly. As an example of this, in some embodiments, the determining 402 may also, or alternatively, be based on a number of first messages received from the wireless device 130. In such embodiments, the first network node 111 may make use of a counter that counts the number of attempts that may be done in the physical channel for RA, e.g., Physical Random Access CHannel (PRACH), attempts that may be likely to come from the same wireless device 130. The first network node 111 may detect multiple PRACH transmissions from the same wireless device 130 in different ways. For example, the wireless device 130 may use the same PRACH preambles for N successive attempts, e.g., N = 2. Alternatively, if the wireless device 130 sends a PRACH and does not receive any answer from the first network node 111, it may try again using slightly higher transmission power and a different pre-amble. In case several PRACH transmissions are received at the first network node 111 from the same angle of arrival and with the same delay using gradually increased power, then the first network node 111 may assume that these PRACH transmissions are likely originating from the same wireless device 130. In case the first network node 111 may determine that the wireless device 130 may be better served by another network node such as the second network node 112, e.g., based on any of the following in the respective network nodes: uplink interference, received power, load, backhaul capabilities, beamforming capabilities, etc..., then it may choose not to respond at all to a particular RAR. That is, the delay may be determined to be indefinite. However if the same wireless device 130 tries to access the system, the first network node 111 may decide to send a RAR after N attempts, which may be taken into account when determining the delay.

In another example, the amount of unnecessary RAR transmissions may also be reduced in case the first network node 111 sends a RAR-transmission indication to its neighbors, such as the second network node 112. This kind of coordination may be much slower since there may be no need for neighboring network nodes to agree on which network node will be the one sending the RAR in advance. A network node with a good set of parameters, such as load, signal quality, etc... may send the RAR with a short delay, while network nodes with a poorer set of parameters may send the RAR somewhat later in most cases. If a RAR transmission indication is sent from the radio network node that answers first, then chances are high that other radio network nodes may receive this message before they have transmitted their RAR, and in that case they may cancel that transmission. The first network node 111 may also decide to cancel a RAR transmission in case it detects a RAR transmission from a neighboring base station, such as the second network node 112, that is likely to be directed towards the wireless device 130 that recently sent a PRACH. According to this, in some embodiments, the determining 402 may be based on a detected second second message, e.g., another Message 2, also referred to herein as fifth message, from the second network node 112 granting the request for access to the second cell 122 served by the second network node 112. In case of TDD, this may not require any additional receiver chain in the first network node 111, allowing a hardware of lower cost.

In a different variation of this last example, the first network node 111 may also detect a transmission of a third message, e.g., a Message 3, from the wireless device 130 to another node. This third message, which is not directed to the first network node 111, but to e.g., the second network node 112, may also be referred to herein as a sixth message or a second third message. The first network node 111 may then decide to cancel the RAR based on an assumption that the wireless device 130 is already being served by another node. The cancelation may also consider the difference in power or spatial properties between the detected sixth message and the preamble of the first message. Using the properties of the two transmissions, it may be possible for the first network node 111 to detect if it was the same wireless device 130 transmitting the preamble in the first message and the sixth message, e.g., the same Message 3. Neighbor network nodes such as the first network node 111 the second network node 112, using slow coordination, e.g., by the first network node 111 sending the fourth message to the second network node 112, may notify each other where they most often schedule their third message and sixth message, respectively, after receiving a given preamble index identifying preamble properties. According to this, in some embodiments, the determining 402 may also or alternatively be based on a detected sixth message, also referred to herein as second third message, e.g., another Message 3, sent by the wireless device 130 to the second network node 112 that has granted the request for access to the second cell 122 served by the second network node 112 to the wireless device 130.

In some embodiments, one or more of the foregoing factors may be combined. In a particular example, the delay may be determined based on a delay timer range. That is, a range of delay timer values. The delay timer range may itself based on at least one of received condition of the radio channel or a load in the first cell 121 served by the first network node 111 and/or on a load in the first network node 111, yet the actual delay or back off time may be randomly generated, that is, not fixed, under the given delay range.

As a summary of the foregoing, in some embodiments, the determining 402 may be based on at least one of: a) the condition of a radio channel between the first network node 111 and the wireless device 130; b) the load in the first cell 121 served by the first network node 111; c) the load in the first network node 111, d) a random determination; e) the one or more capabilities of the wireless device 130; f) the number of first messages received from the wireless device 130; g) the detected fifth message from the second network node 112 granting the request for access to the second cell 122 served by the second network node 112, and h) the detected sixth message sent by the wireless device 130 to the second network node 112 that has granted the request for access to the second cell 122 served by the second network node 112 to the wireless device 130.

It should also be considered that as another example of this Action 402, the first network node 111 may determine the delay for sending the second message to the wireless device 130 by setting a certain priority in the scheduler of the first network node 111, such as setting a lower priority for a second message that is to be delayed. In other words, in these cases, the first network node 111 may not cancel or explicitly delay the RAR. The RAR may be delayed if the load is high, while at low load the RAR may be sent without additional delay.

### Action 403

In this action, the first network node 111 sends the second message to the wireless device 130 using said determined delay, the second message comprising a response to the request for access. The second message may be a Message 2 or RAR sent via the first radio link 141. The response to the request for access may provide the wireless device 130 with e.g., a resource allocation, an identity for further communication, or timing information so the wireless device 130 may compensate for the distance from the first network node 111.It should be noted that, if the first network node 111 determines in Action 402 that the delay should be indefinite, then the first network node 111, based on this determination, may not send the second message to the wireless device 130.

### Action 404

In this Action, the first network node 111 may receive a third message from the wireless device 130, to the first network node 111, in response to the second message. A response to the second message may be a request by the wireless device 130 to e.g., establish a connection to the network, it may also contain payload data, a buffer status indication or other control information. In for example, LTE, this Action 404 may be implemented by receiving, an RRC Connection Request from the wireless device 130, via the first radio link 141. This Action 404 may be performed, for example, if the first network node 111 has been the first to send a second message to the wireless device 130 and the wireless device 130 has sent a third message to the first network node 111 in response.

This action is optional, since for example, the wireless device 130 may have decided to respond instead to the second network node 112, if the wireless device 130 receives first the fifth message from the second network node 112, because e.g., the second network node 112 is closer to the wireless device 130.

### Action 405

As explained earlier, in some embodiments, the amount of unnecessary transmissions of second messages, e.g., RARs, may also be reduced by the first network node 111 sending an indication to its neighbors, such as the second network node 112, of having sent the second message. This kind of coordination may not require the neighboring network nodes to agree which network node will be the one sending the RAR in advance. In order to allow for this coordination, in this action, the first network node 111 may send a fourth message to the second network node 112, the fourth message comprising a third indication that the second message has been sent by the first network node 111 to the wireless device 130. This Action may be implemented by sending for example, an inter-node message, X2 message, or an X2 Application Protocol (X2AP) message to the second network node 112, via the third link 143. Here, the third indication may be for example in the form of a load management message.

This action is optional.

In some embodiments, the first network node 111 may also send other indications to the wireless device 130. These indications may be referred to herein as fourth indications to distinguish them from the indications mentioned previously. First indication, second indication, third indication and fourth indications are arbitrarily used to distinguish among the different types of indications, but they do not have an additive numerical value. That is, e.g., the one or more fourth indications does not imply that the first, second and third indications have necessarily been sent. By the first network node 111 sending the one or more fourth indications, the wireless device 130, may use these indications to determine whether to respond to the second message from the first network node 111 right away, or whether to wait, e.g., if the quality of the first radio link 141 is very poor. Hence, in some embodiments, the second message may comprise one or more fourth indications for at least one of the following. One fourth indication may be of the condition of a radio channel between the first network node 111 and the wireless device 130, that is, of the first radio link 141. This may be for example, a measurement of PRACH received power. Another fourth indication may be of the load in a first cell 121 served by the first network node 111, so that if the traffic in the first cell 121 is very high, the wireless device 130 may be enabled to decide to opt to send a third message to a network node serving a cell with lower load. Here, the fourth indication may be for example in the form of a value of an index from a pre-defined table as part of an RRC message.

Yet another fourth indication may be of the load in the first network node 111. Here, the fourth indication may be for example in the form of a value of an index from a pre-defined table as part of an RRC message or a high-medium-low value coded in some bits of the MAC frame.

A further fourth indication may be of a capability of the first network node 111, such as beamforming, a backhaul capability. A capability of the first network node 111 may be understood herein as a feature of the first network node 111 that may allow it to support one or more functions. As explained earlier, depending of the own capabilities of the wireless device 130, it may prefer certain network capabilities as well, that may match the best with its own. Here, the fourth indication may be for example in the same form of the first indication.

Another fourth indication may be the second indication when it is the indication of the maximum delay by the wireless device 130 to send the third message to the first network node 111 in response to the second message. The wireless device 130 may then use this indication as explained earlier.

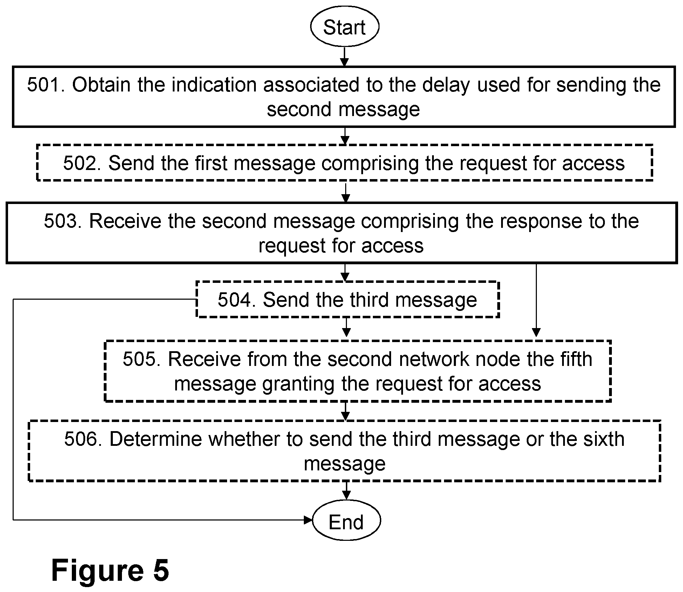

Embodiments of a method performed by the wireless device 130 for receiving the response from the first network node 111 to the request for access, will now be described with reference to the flowchart depicted in **Figure 5****.** As stated earlier, the wireless device 130 and the first network node 111 operate in the wireless communications network 100.

The detailed description of some of the following corresponds to the same references provided above, in relation to the actions described for the first network node 111, and will thus not be repeated here.

The method may comprise the following actions, which actions may as well be carried out in another suitable order than that described below.

### Action 501

In this action, the wireless device 130 obtains the first indication associated to the delay used by the first network node 111 for sending the response to the request for access. The wireless device 130 may obtain the first indication as a result of Action 400, by receiving e.g. system information broadcasted by the first network node 111. The wireless device 130 may alternatively obtain the first indication based on preconfigured information. The wireless device 130 may then be enabled to use the first indication as explained earlier in relation to Action 400. For example, the first indication may comprise the indication of the maximum delay by the first network node 111 to send the second message.

In this Action 501, the wireless device 130 may also obtain the second indication associated to the delay used by the first network node 111 for sending the response to the request for access. Similarly to the first indication, the wireless device 130 may obtain the second indication as a result of Action 400, by receiving e.g. system information broadcasted by the first network node 111. The wireless device 130 may then be enabled to use the second indication as explained earlier in relation to Action 400. The second indication may comprise the indication of the maximum delay by the wireless device 130 to send the third message to the first network node 111 in response to the second message.

### Action 502

When for example the wireless device 130 may detect the first cell 121, the wireless device 130 may send an access request to the first network node 111. Therefore, in this Action, the wireless device 130 may send the first message to the first network node 111, the first message comprising the request for access.

### Action 503

In this action, the wireless device 130 may receive from the first network node 111, e.g. via the first radio link 141, the second message comprising the response to the request for access comprised in the first message sent by the wireless device 130. The receiving in this Action 503 is based on the delay, since the moment in time when the wireless device 130 may receive the second message will be delayed at least as much as the sending of the second message by the first network node 111 was delayed.

### Action 504

In this action, the wireless device 130 may send, to the first network node 111, e.g. via the first radio link 141, the third message in response to the second message. This Action 504 may be performed if the first network node 111 has been the first to send a second message to the wireless device 130, for example, and the wireless device 130 may determine to send the third message to the first network node 111 in response.

In some embodiments wherein the wireless device 130 may have obtained the second indication, the sending of the third message may be delayed based on the obtained second indication. For example, using the information provided by the one or more fourth indications comprised in the received second message from the first network node 111, e.g. additional measurements such as, RSRP, the wireless device 130 may decide if it may answer to the second message from the first network node 111 right away, or if it may wait a while, as long as the maximum delay by the wireless device 130 has not expired, to send the third message to the first network node 111, and hopefully receive another second message, e.g., RAR message, from another node, e.g., the second network node 112, that may be better suited for the wireless device 130. For example, the second network node 112 may have a lower load, or superior capabilities than the first network node 111. That is, the wireless device 130 may determine, based on the delay and the first indication, whether to send a response to the second message from the first network node (111) or not.

Action 504 is optional.

### Action 505

In some embodiments, the wireless device 130 may receive, from the second network node 112, e.g., via the second radio link 142, the fifth message granting the request for access to the second cell 122 served by the second network node 112. As mentioned earlier, the fifth message is just used as nomenclature to distinguish the second message type, e.g., Message 2, sent by the second network node 112 from the second message type sent by the first network node 111. This Action 505 may be performed when the second network node 112 has also received a first message from the wireless device 130 with a request for access.

In some embodiments, the receiving 505, from the second network node 112, the fifth message granting the request for access to the second cell 122, may be based on the delay. For example, if the delay used by the first network node 111 for sending its second message in response to the request for access from the wireless device 130 is very short, because e.g., the load in the first cell 121 is very low, then the first network node 111 may have reported to the second network node 112 the sending of its second message to the wireless device 130, and the second network node 112 may no longer respond to the second first message from the wireless device 130.

### Action 506

In some embodiments, wherein the wireless device 130 may receive the fifth message from the second network node 112, the fifth message may comprise one or more fifth indications. The one or more fifth indications are equivalent to the one or more fourth indications, but in respect to the second network node 112. That is, the one or more fifth indications may be for at least one of the following. One fifth indication may be of the condition of a radio channel between the second network node 112 and the wireless device 130, that is, of the second radio link 142. Another fifth indication may be of the load in the second cell 122 served by the second network node 112. Yet another fifth indication may be of the load in the second network node 112. A further fifth indication may be of a capability of the second network node 112.

In some embodiments, wherein the wireless device 130 may receive the fifth message from the second network node 112, in this action, the wireless device 130 may determine, whether to send one of: i) the third message to the first network node 111 in response to the second message, or ii) the sixth message to the second network node 112 in response to the fifth message. The determining whether to send the third message or the sixth message may be based on at least one of the following: a) the one or more fourth indications comprised in the received second message from the first network node 111, b) the one or more fifth indications comprised in the received fifth message from the second network node 112, and c) a time of receipt of the second message and/or a time of receipt of the fifth message. Using the information provided by the one or more fourth indications and/or the one or more fifth indications, e.g. additional measurements, the wireless device 130 may decide if it may answer to the second message from the first network node 111 or the fifth message from the second network node 112.

In case the received second message from the first network node 111 does not contain such one or more fourth indications, or the fifth message from the second network node 112 does not comprise the one or more fifth indications, then this Action 506 may not be performed. This action is optional.

According to this Action, the wireless device 130 may also determine which network node to send a response to, by taking into consideration the timing of receipt of each of the second message and the fifth message, or at least one of them. For example, the wireless device 130 may send a response to the network node from which it first received a response to its first message. In some embodiments, the wireless device may determine to respond to the network node that answers to the first message first, and ignore any response from the other node. For example, the wireless device 130 may determine to send the third message to the first network node 111, and it may then determine to ignore the received fifth message from the second network node 112, and not respond to it.

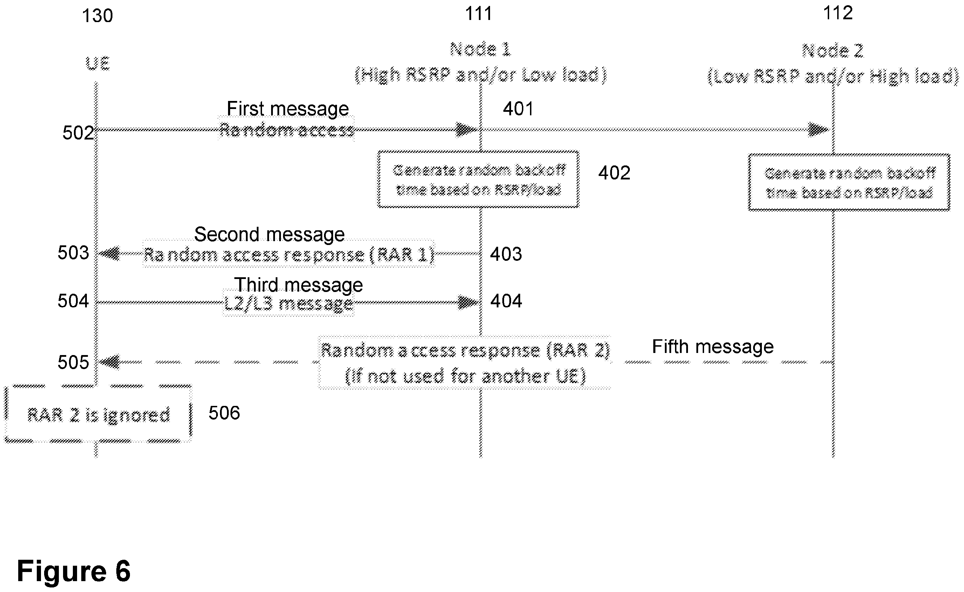

**Figure 6** is a schematic diagram illustrating a non-limiting example of a first group of embodiments herein, wherein the first network node 111 determines the delay for sending the second message to the wireless device 130 based on the condition of the radio channel between the first network node 111 and the wireless device 130. In this example, the wireless device 130 is a UE, which has already obtained the first indication associated to the delay used by the first network node 111 for sending the response to the request for access from the wireless device 130, according to Action 501. Action 501 is not represented in the figure. In the example of Figure 6, the first network node 111 is represented as Node 1 and it has high RSRP and/or low load, and the second network node 112 is represented as Node 2, and it has low RSRP and/or high load. In Action 501, the wireless device 130 sends the first message to the first network node 111 comprising the request for access, which is received by the first network node 111 in Action 401. The wireless device 130 also sends a second first message to the second network node 112. In Action 402, the first network node 111 determines the delay for sending the second message to the wireless device 130 by generating a random delay further based on at least one of the RSRP and the load. The delay is represented in the Figure as a backoff time. The random delay is based on a preconfigured delay timer, which is configured in inverse proportion to the received condition of the radio channel, e.g., RSRP, RSRQ, SNR, SINR etc... and/or in direct proportion to the load. The second network node 112 performs a similar action, independently. At 403, the first network node 111, which has a better condition of the radio channel than the second network node 112, sends the second message to the wireless device 130 using said determined delay first. The second message is received by the wireless device 130 at 503. At 504, the wireless device 130 sends the third message to the first network node 111, represented as an L2/L3 message. The third message is received by the first network node 111 at 404. At 505, the the wireless device 130 receives, with longer delay, the fifth message granting the request for access to the second cell 122 from the second network node 112, if not used for another UE. But at 506, the wireless device 130 decides to ignore the fifth message, or RAR2 from the second network node 112, based the one or more fourth indications received from the first network node 111 reporting that the first network node 111 has good conditions of the radio channel, high RSRP and/or low load.

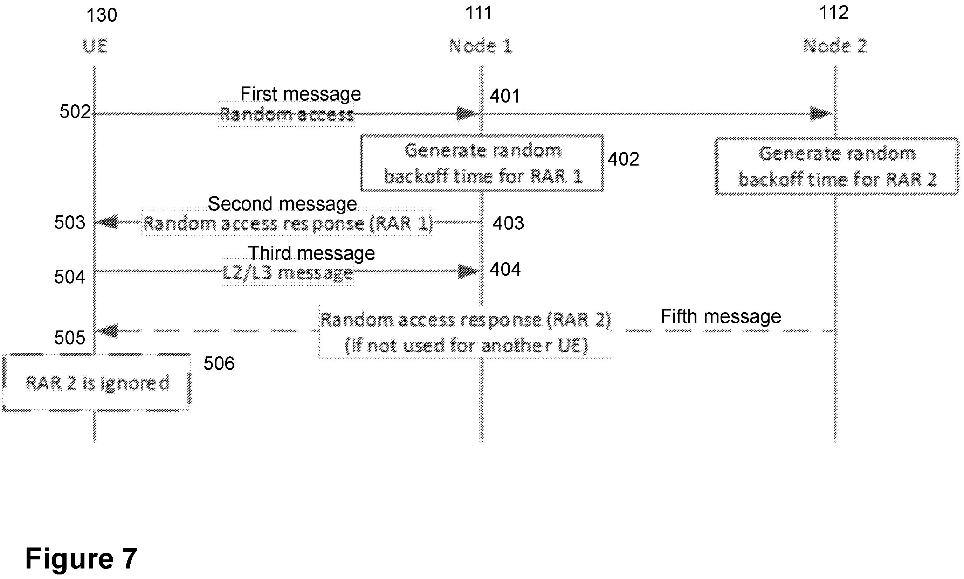

**Figure 7** is a schematic diagram illustrating a non-limiting example of a second group of embodiments herein, which are not according to the invention and are present for illustration purposes only, wherein the first network node 111 determines the delay for sending the second message to the wireless device 130 randomly. In this example, the RSRP or load of each of the first network node 111 and the second network node 112 is not considered. The description Figure 7 is otherwise equivalent to that of Figure 6. In this particular example, the first network node 111 has randomly determined a shorter delay to respond to the request for access from the wireless device 130 than the second network node 112, and therefore it sends the second message to the wireless device 130 faster than the second network node 112.

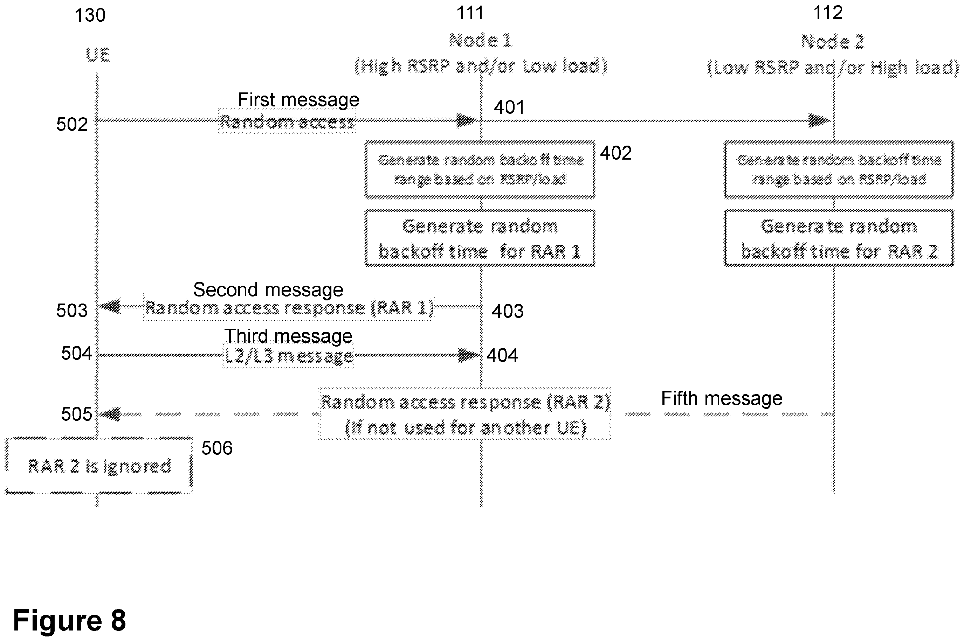

**Figure 8** is a schematic diagram illustrating a non-limiting example of a third group of embodiments herein, which are not according to the invention and are present for illustration purposes only, wherein the first network node 111 determines the delay for sending the second message to the wireless device 130 as based on a combination of the condition of the radio channel between the first network node 111 and the wireless device 130, and a random determination, based on a range of values which are determined based on the condition of the radio channel. The description Figure 8 is otherwise equivalent to that of Figure 6 and 7. The first network node 111 here determines the delay for sending the second message to the wireless device 130 by generating a delay range or backoff time range instead of a single value. Yet, within this range, the actual delay to send the second message may be randomly determined without taking the received condition of the radio channel and/or load into account. In this particular example, the first network node 111 has determined a shorter delay to respond to the request for access from the wireless device 130 than the second network node 112, and therefore it sends the second message to the wireless device 130 faster than the second network node 112.

An advantage of embodiments herein is that both the first network node 111 and the wireless device 130 may benefit from the proactive conflict resolution. A conflict may arise when the wireless device may receive multiple responses to a request for access, and may not comply with all. According to embodiments herein, for instance, the signalling overhead associated with the need for coordination among the network nodes receiving an access request from the wireless device 130 may be reduced or removed, and yet the first network node 111 may be able to steer the initial access of the wireless device 130 towards a specific network node. On the wireless device 130 side, the processing, and the energy-consumption associated with it, may be lowered.

To summarize the foregoing in other words, with some examples, embodiments herein relate to a Proactive Random Access Response (RAR) conflict resolution. Embodiments herein may therefore relate to performing at least part of the RAR conflict resolution on the transmitter side by means of delaying a RAR transmission in dependence of PRACH measurements and/or radio network node load and/or radio network node capabilities. Particular embodiments herein may relate to an approach to deal with one of the potential problems in the concept of non-node-specific RACH, particularly RAR conflict as part of non-node-specific RACH concept. The RAR conflict may be understood herein as the problem that arises when more than one network node receives a request for access from a same wireless device, and responds to the request, since the wireless device may only access one network node at a time. It may be difficult for wireless device to process, decode, or handle multiple responses to the request for access. Embodiments herein provide a proactive RAR conflict resolution mechanism.

On the side of the first network node 111, the provided method may comprise: a) Detecting one or more first messages, e.g., random access attempts, b) Sending the second message, e.g., message 2 or RAR, where transmission parameters of the second message, e.g. delay, power, response probability, etc, and/or procedure, e.g., providing optional response information to neighboring nodes and/or including optional measurements in the RAR message, etc, may be derived in dependence on at least one of a received signal condition, that is, the condition of the radio channel, and a radio network node load, that is the load in the first cell 121 served and/or on the load in the first network node 111, and c) Receiving the third message, e.g., message 3, or L2/L3 message.

On side of the wireless device 130, the provided method may comprise: a) Sending a first message, e.g., a random access preamble, b) Receiving the second message, e.g., a message 2 or RAR transmission, c) Deciding to send the third message, e.g., message 3 , the L2/L3 message, in response to said RAR transmission, d) In case the second message may contain additional measurements such as PRACH received power and/or eNodeB load and/or eNodeB beamforming capabilities, the wireless device 130 may use the additional measurements to decide if the wireless device 130 may answer to this second message right away, or wait a while and hopefully receive another RAR message from another node, d) In case the second message does not contain such additional measurements then this step may be removed, e) Sending the third message, e.g., message 3, the L2/L3 message, or restarting with a new first message, e.g., a new random access preamble.

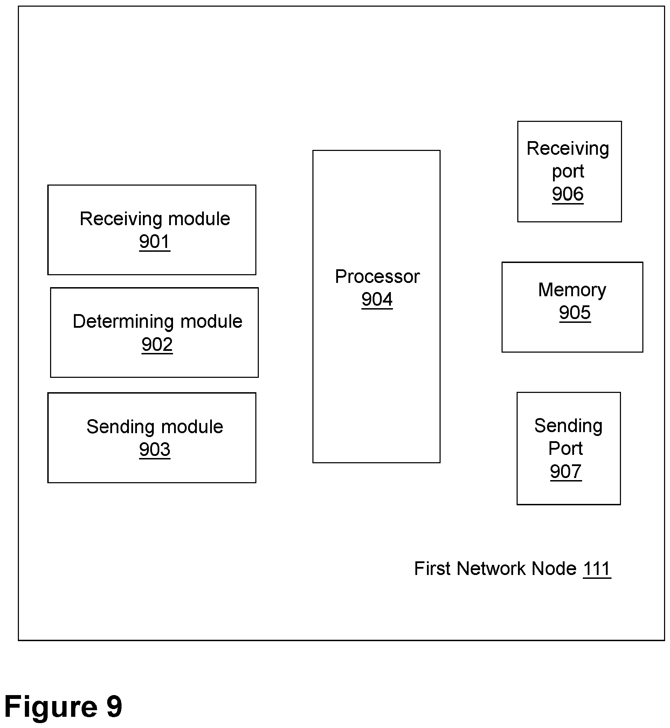

To perform the method actions described above in relation to Figures 4 and 6-8, the first network node 111 is configured to handle the request for access from the wireless device 130. The first network node 111 comprises the following arrangement depicted in **Figure 9****.** As already mentioned, the first network node 111 is configured to operate in the wireless communications network 100.

The detailed description of some of the following corresponds to the same references provided above, in relation to the actions described for the first network node 111, and will thus not be repeated here.

The first network node 111 is further configured to, e.g., by means of a **receiving module 901** configured to, receive the first message from the wireless device 130 comprising the request for access.

The receiving module 901 may be a **processor 904** of the first network node 111.

In some embodiments, which are not according to the invention and are present for illustration purposes only, the first network node 111 may be further configured to, e.g., by means of the receiving module 901 configured to, receive the third message from the wireless device 130 in response to the second message.

The first network node 111 is further configured to, e.g., by means of a **determining module 902** configured to, determine the delay for sending the second message to the wireless device 130 in response to the received first message.

The determining module 902 may be the processor 904 of the first network node 111.

In some embodiments, to determine may be configured to be based on at least one of: a) the condition of the radio channel between the first network node 111 and the wireless device 130, b) the load in the first cell 121 configured to be served by the first network node 111, c) the load in the first network node 111, d) the random determination, e) the one or more capabilities of the wireless device 130, f) the number of first messages configured to be received from the wireless device 130, g) the detected fifth message from the second network node 112 granting the request for access to the second cell 122 configured to be served by the second network node 112, and h) the detected sixth message configured to be sent by the wireless device 130 to the second network node 112 that has granted the request for access to the second cell 122 configured to be served by the second network node 112 to the wireless device 130.

The first network node 111 is further configured to, e.g., by means of a **sending module 903** configured to, send the second message to the wireless device 130 using said determined delay, the second message comprising the response to the request for access.

The sending module 903 may be the processor 904 of the first network node 111.

In some embodiments, which are not according to the invention and are present for illustration purposes only, the first network node 111 may be further configured to, e.g., by means of the sending module 903 configured to, send, to the wireless device 130, at least one of the first indication associated to the determined delay and the second indication associated to the determined delay.

In some embodiments, the first indication may comprise the indication of the maximum delay by the first network node 111 to send the second message. In some embodiments, the second indication comprises the indication of the maximum delay by the wireless device 130 to send the third message to the first network node 111 in response to the second message.

The first network node 111 may be further configured to, e.g., by means of the sending module 903 configured to, send the fourth message to the second network node 112, the fourth message comprising the third indication that the second message has been sent by the first network node 111 to the wireless device 130.

In some embodiments, the second message comprises the one or more fourth indications for at least one of: a) the condition of the radio channel between the first network node 111 and the wireless device 130, b) the load in the first cell 121 configured to be served by the first network node 111, c) the load in the first network node 111, d) the capability of the first network node 111, and e) the indication of the maximum delay by the wireless device 130 to send the third message to the first network node 111 in response to the second message.

The embodiments herein to handle the request for access from the wireless device 130 may be implemented through one or more processors, such as the processor 904 in the first network node 111 depicted in Figure 9, together with computer program code for performing the functions and actions of the embodiments herein. The program code mentioned above may also be provided as a computer program product, for instance in the form of a data carrier carrying computer program code for performing the embodiments herein when being loaded into the in the first network node 111. One such carrier may be in the form of a CD ROM disc. It is however feasible with other data carriers such as a memory stick. The computer program code may furthermore be provided as pure program code on a server and downloaded to the first network node 111. The computer program code may also be provided as a service from the cloud. As indicated above, the processor 904 may comprise one or more circuits, which may also be referred to as one or more modules in some embodiments, each configured to perform the actions carried out by the first network node 111, as described above in reference to Figure 9, e.g., the receiving module 901, the determining module 902 and the sending module 903. Hence, in some embodiments, the receiving module 901, the determining module 902 and the sending module 903 described above may be implemented as one or more applications running on one or more processors such as the processor 904. That is, the methods according to the embodiments described herein for the first network node 111 may be respectively implemented by means of a computer program product, comprising instructions, i.e., software code portions, which, when executed on at least one processor, cause the at least one processor to carry out the actions described herein, as performed by the first network node 111. The computer program product may be stored on a computer-readable storage medium. The computer-readable storage medium, having stored thereon the computer program, may comprise instructions which, when executed on at least one processor, cause the at least one processor to carry out the actions described herein, as performed by the first network node 111. In some embodiments, the computer-readable storage medium may be a non-transitory computer-readable storage medium, such as a CD ROM disc, a memory stick, or stored in the cloud space. In other embodiments, the computer program product may be stored on a carrier containing the computer program, wherein the carrier is one of an electronic signal, optical signal, radio signal, or the computer-readable storage medium, as described above.

The first network node 111 may further comprise a **memory 905** comprising one or more memory units. The memory 905 may be arranged to be used to store obtained information, such as the information received by the processor 904, store data configurations, scheduling, and applications etc. to perform the methods herein when being executed in the first network node 111. Memory 905 may be in communication with the processor 904. Any of the other information processed by the processor 904 may also be stored in the memory 905.

In some embodiments, which are not according to the invention and are present for illustration purposes only, information e.g., from the wireless device 130 or the second network node 112, may be received through a **receiving port 906.** The receiving port 906 may be in communication with the processor 904. The receiving port 906 may also be configured to receive other information.

The processor 904 may be further configured to send messages, e.g., to the wireless device 130 or the second network node 112, through **a sending port 907,** which may be in communication with the processor 904, and the memory 905.

Those skilled in the art will also appreciate that the any module within the first network node 111, e.g., the receiving module 901, the determining module 902 and the sending module 903 described above, may refer to a combination of analog and digital circuits, and/or one or more processors configured with software and/or firmware, e.g. stored in the memory, that when executed by the one or more processors such as the processor 904, perform actions as described above, in relation to Figures 4 and 6-8. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

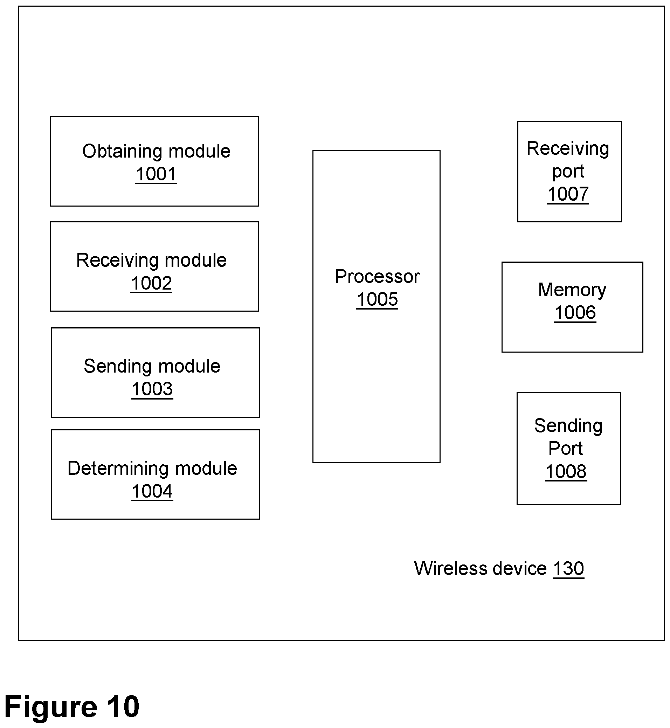

To perform the method actions described above in relation to Figures 5, and 6-8, the wireless device 130 is configured to receive the response from the first network node 111 to the request for access. The wireless device 130 comprises the following arrangement depicted in **Figure 10****.** As already mentioned, the wireless device 130 is configured to operate in the wireless communications network 100.

The detailed description of some of the following corresponds to the same references provided above, in relation to the actions described for the wireless device 130, and will thus not be repeated here.

The wireless device 130 is further configured to, e.g., by means of an **obtaining module 1001** configured to, obtain the first indication associated to the delay configured to be used by the first network node 111 for sending the response to the request for access.

The obtaining module 1001 may be a **processor 1005** of the wireless device 130.

In some embodiments, the first indication comprises the indication of the maximum delay by the first network node 111 to send the second message.

In some embodiments, which are not according to the invention and are present for illustration purposes only, the wireless device 130 may be further configured to, e.g., by means of the obtaining module 1001 configured to, obtain the second indication associated to the delay configured to be used by the first network node 111 for sending the response to the request for access, wherein the second indication comprises the indication of the maximum delay by the wireless device 130 to send the third message to the first network node 111 in response to the second message.

In some of these embodiments, the first indication comprises the indication of the maximum delay by the first network node 111 to send the second message.

The wireless device 130 is further configured to, e.g., by means of a **receiving module 1002** configured to, receive, from the first network node 111, the second message comprising the response to the request for access comprised in the first message configured to be sent by the wireless device 130, to receive being based on the delay.

The receiving module 1002 may be the processor 1005 of the wireless device 130.

In some embodiments, which are not according to the invention and are present for illustration purposes only, the wireless device 130 may be further configured to, e.g., by means of the receiving module 1002 configured to, receive, from the second network node 112, the fifth message granting the request for access to a second cell 122 configured to be served by the second network node 112.

In some embodiments, to receive, from the second network node 112, the fifth message granting the request for access to the second cell 122, is based on the delay.

The wireless device 130 may be further configured to, e.g., by means of a **sending module 1003** configured to, send the first message to the first network node 111.

The sending module 1003 may be the processor 1005 of the wireless device 130.

In some embodiments, which are not according to the invention and are present for illustration purposes only, the wireless device 130 may be further configured to, e.g., by means of the sending module 1003 configured to, send, to the first network node 111, the third message in response to the second message, wherein to send the third message may be configured to be delayed based on the second indication configured to be obtained.

In some of these embodiments, the first indication comprises the indication of the maximum delay by the first network node 111 to send the second message.

The wireless device 130 may be further configured to, e.g., by means of a **determining module 1004** configured to, determine, whether to send one of: i) the third message to the first network node 111 in response to the second message, or ii) the sixth message to the second network node 112 in response to the fifth message, to determine whether to send the third message or the sixth message being based on at least one of the following: a) the one or more fourth indications comprised in the second message configured to be received from the first network node 111, b) the one or more fifth indications comprised in the fifth message configured to be received from the second network node 112, and c) the time of receipt of the second message and/or the time of receipt of the fifth message.

The determining module 1004 may be the processor 1005 of the wireless device 130.

In some of these embodiments, to receive, from the second network node 112, the fifth message granting the request for access to the second cell 122, is based on the delay.

The embodiments herein for the actions performed by the wireless device 130 may be implemented through one or more processors, such as the processor 1005 in the wireless device 130 depicted in Figure 10, together with computer program code for performing the functions and actions of the embodiments herein. The program code mentioned above may also be provided as a computer program product, for instance in the form of a data carrier carrying computer program code for performing the embodiments herein when being loaded into the in the wireless device 130. One such carrier may be in the form of a CD ROM disc. It is however feasible with other data carriers such as a memory stick. The computer program code may furthermore be provided as pure program code on a server and downloaded to the wireless device 130. The computer program code may also be provided as a service from the cloud. As indicated above, the processor 1005 may comprise one or more circuits, which may also be referred to as one or more modules in some embodiments, each configured to perform the actions carried out by the wireless device 130, as described above in reference to Figure 10, e.g., the obtaining module 1001, the receiving module 1002, the sending module 1003 and the determining module 1004. Hence, in some embodiments, the obtaining module 1001, the receiving module 1002, the sending module 1003 and the determining module 1004 described above may be implemented as one or more applications running on one or more processors such as the processor 1005. That is, the methods according to the embodiments described herein for the wireless device 130 may be respectively implemented by means of a computer program product, comprising instructions, i.e., software code portions, which, when executed on at least one processor, cause the at least one processor to carry out the actions described herein, as performed by the wireless device 130. The computer program product may be stored on a computer-readable storage medium. The computer-readable storage medium, having stored thereon the computer program, may comprise instructions which, when executed on at least one processor, cause the at least one processor to carry out the actions described herein, as performed by the wireless device 130. In some embodiments, the computer-readable storage medium may be a non-transitory computer-readable storage medium, such as a CD ROM disc, a memory stick, or stored in the cloud space. In other embodiments, the computer program product may be stored on a carrier containing the computer program, wherein the carrier is one of an electronic signal, optical signal, radio signal, or the computer-readable storage medium, as described above.

The wireless device 130 may further comprise a memory 1006 comprising one or more memory units. The memory 1006 may be arranged to be used to store obtained information, such as the information received by the processor 1005, store data configurations, scheduling, and applications etc. to perform the methods herein when being executed in the wireless device 130. Memory 1006 may be in communication with the processor 1005. Any of the other information processed by the processor 1005 may also be stored in the memory 1006.

In some embodiments, which are not according to the invention and are present for illustration purposes only, information e.g., from the first network node 111 or the second network node 112, may be received through a **receiving port 1007.** The receiving port 1007 may be in communication with the processor 1005. The receiving port 1007 may also be configured to receive other information.

The processor 1005 may be further configured to send messages, e.g., to the first network node 111 or the second network node 112, through **a sending port 1008,** which may be in communication with the processor 1005, and the memory 1006.

Those skilled in the art will also appreciate that the any module within the wireless device 130, e.g., the obtaining module 1001, the receiving module 1002, the sending module 1003 and the determining module 1004 described above, may refer to a combination of analog and digital circuits, and/or one or more processors configured with software and/or firmware, e.g. stored in the memory, that when executed by the one or more processors such as the processor 1005, perform actions as described above, in relation to Figures 5-8. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

## Claims

1. A method performed by a first network node (111) for handling a request for access from a wireless device (130), the wireless device (130) and the first network node (111) operating in a wireless communications network (100), the method comprising:
*receiving* (401) a first message from the wireless device (130) comprising a request for access,
*determining* (402) a delay for sending a second message to the wireless device (130), in response to the received first message, by setting a certain priority in a scheduler of the first network node (111), wherein the delay is determined based on a preconfigured delay timer, and wherein the preconfigured delay timer is a table that provides the determined delay based on one or more input values,
*sending* (403) the second message to the wireless device (130) using said determined delay, the second message comprising a response to the request for access, wherein the second message further comprises one or more fourth indications for at least one of:
a) a condition of a radio channel between the first network node (111) and the wireless device (130),
b) a load in a first cell (121) served by the first network node (111),
c) a load in the first network node (111),
d) a capability of the first network node (111), and
e) an indication of a maximum delay by the wireless device (130) to send a third message to the first network node (111) in response to the second message, and
*sending* (405) a fourth message to a second network node (112), the fourth message comprising a third indication that the second message has been sent by the first network node (111) to the wireless device (130), wherein the second network node (112) is a neighbor network node.

2. The method of claim 1, wherein the one or more input values comprises:
a) a condition of a radio channel between the first network node (111) and the wireless device (130),
b) a load in a first cell (121) served by the first network node (111),
c) a load in the first network node (111),
d) a random determination,
e) one or more capabilities of the wireless device (130),
f) a number of first messages received from the wireless device (130),
g) a detected fifth message from the second network node (112) granting the request for access to a second cell (122) served by the second network node (112), and
h) a detected sixth message sent by the wireless device (130) to the second network node (112) that has granted the request for access to the second cell (122) served by the second network node (112) to the wireless device (130).

3. The method of claim 1 or 2, further comprising sending (400), to the wireless device (130), at least one of a first indication associated to the determined delay and a second indication associated to the determined delay, wherein the first indication comprises an indication of a maximum delay by the first network node (111) to send the second message, and wherein the second indication comprises an indication of a maximum delay by the wireless device (130) to send a third message to the first network node (111) in response to the second message.

4. The method of any of claims 1-3, further comprising:
*receiving* (404) the third message from the wireless device (130) to the first network node (111) in response to the second message.

5. A method performed by a wireless device (130) for receiving a response from a first network node (111) to a request for access, the wireless device (130) and the first network node (111) operating in a wireless communications network (100), the method comprising:
*obtaining* (501) a first indication indicating a delay used by the first network node (111) for sending a response to a request for access,
*receiving* (503), from the first network node (111), a second message comprising the response to the request for access comprised in a first message sent by the wireless device (130), the receiving (503) being based on the delay, wherein the second message comprises one or more fourth indications for at least one of:
a) a condition of a radio channel between the first network node (111) and the wireless device (130),
b) a load in a first cell (121) served by the first network node (111),
c) a load in the first network node (111),
d) a capability of the first network node (111), and
e) an indication of a maximum delay by the wireless device (130) to send a third message to the first network node (111) in response to the second message,
*receiving* (505), from a second network node (112), a fifth message granting the request for access to a second cell (122) served by the second network node (112), wherein the second network node (112) is neighbor network node of the first network node, and
*determining* (506), whether to send one of: i) a third message to the first network node (111) in response to the second message, or ii) a sixth message to the second network node (112) in response to the fifth message,
the determining (506) whether to send the third message being based on at least one of the following:
the one or more fourth indications comprised in the received second message from the first network node (111) and a time of receipt of the second message, and
the determining (506) whether to send the sixth message being based on at least one of the following:
one or more fifth indications comprised in the received fifth message from the second network node (112), and a time of receipt of the fifth message, wherein the one or more fifth indications are for at least one of the following:
a condition of a radio channel between the second network node and the wireless device,
a load in a second cell served by the second network node, and
a capability of the second network node.

6. The method of claim 5, wherein the first indication comprises an indication of a maximum delay by the first network node (111) to send the second message, the method further comprising:
*obtaining* (501) a second indication associated to the delay used by the first network node (111) for sending a response to a request for access, wherein the second indication comprises an indication of a maximum delay by the wireless device (130) to send a third message to the first network node (111) in response to the second message,
*sending* (502) the first message to the first network node (111), and
*sending* (504), to the first network node (111), a third message in response to the second message, the sending (504) of the third message being delayed based on the obtained second indication.

7. A computer program comprising instructions which, when executed on at least one processor, cause the at least one processor to carry out the method according to any one of claims 1 to 6.

8. A computer-readable storage medium, having stored thereon a computer program comprising instructions which, when executed on at least one processor, cause the at least one processor to carry out the method according to any one of claims 1 to 6.

9. A first network node (111) configured to handle a request for access from a wireless device (130), the first network node (111) being configured to operate in a wireless communications network (100), the first network node (111) being further configured to:
receive a first message from the wireless device (130) comprising a request for access,
determine a delay for sending a second message to the wireless device (130), in response to the received first message, by setting a certain priority in a scheduler of the first network node (111), wherein the delay is determined based on a preconfigured delay timer, and wherein the preconfigured delay timer is a table that provides the determined delay based on one or more input values,
send the second message to the wireless device (130) using said determined delay, the second message comprising a response to the request for access, wherein the second message comprises one or more fourth indications for at least one of:
a) a condition of a radio channel between the first network node (111) and the wireless device (130),
b) a load in a first cell (121) served by the first network node (111),
c) a load in the first network node (111),
d) a capability of the first network node (111), and
e) an indication of a maximum delay by the wireless device (130) to send a third message to the first network node (111) in response to the second message, and
send a fourth message to a second network node (112), the fourth message comprising a third indication that the second message has been sent by the first network node (111) to the wireless device (130), wherein the second network node (112) is a neighbor network node.

10. A wireless device (130) configured to receive a response from a first network node (111) to a request for access, the wireless device (130) being configured to operate in a wireless communications network (100), the wireless device (130) being further configured to:
obtain a first indication indicating a delay configured to be used by the first network node (111) for sending a response to a request for access, and
receive, from the first network node (111), a second message comprising the response to the request for access comprised in a first message configured to be sent by the wireless device (130), to receive being based on the delay, wherein the second message comprises one or more fourth indications for at least one of:
a) a condition of a radio channel between the first network node (111) and the wireless device (130),
b) a load in a first cell (121) served by the first network node (111),
c) a load in the first network node (111),
d) a capability of the first network node (111), and
e) an indication of a maximum delay by the wireless device (130) to send a third message to the first network node (111) in response to the second message,
receive from a second network node (112), a fifth message granting the request for access to a second cell (122) served by the second network node (112), wherein the second network node (112) is a neighbor network node of the first network node, and
determine whether to send one of: i) a third message to the first network node (111) in response to the second message, or ii) a sixth message to the second network node (112) in response to the fifth message,
the determining whether to send the third message being based on at least one of the following:
one or more fourth indications comprised in the received second message from the first network node (111) and a time of receipt of the second message, and
the determining whether to send the sixth message being based on at least one of the following:
one or more fifth indications comprised in the received fifth message from the second network node (112), and a time of receipt of the fifth message, wherein the one or more fifth indications are for at least one of the following: a condition of a radio channel between the second network node and the wireless device, a load in a second cell served by the second network node, and a capability of the second network node.

## Patentansprüche

1. Verfahren, das von einem ersten Netzwerkknoten (111) zum Behandeln einer Zugangsanforderung von einer drahtlosen Vorrichtung (130) durchgeführt wird, wobei die drahtlose Vorrichtung (130) und der erste Netzwerkknoten (111) in einem drahtlosen Kommunikationsnetz (100) arbeiten, wobei das Verfahren Folgendes umfasst:
*Empfangen* (401) einer ersten Nachricht von der drahtlosen Vorrichtung (130), die eine Zugangsanforderung umfasst,
*Bestimmen* (402) einer Verzögerung zum Senden einer zweiten Nachricht an die drahtlose Vorrichtung (130) als Antwort auf die empfangene erste Nachricht durch Einstellen einer bestimmten Priorität in einem Scheduler des ersten Netzwerkknotens (111), wobei die Verzögerung basierend auf einem vorkonfigurierten Verzögerungszeitgeber bestimmt wird, und wobei der vorkonfigurierte Verzögerungszeitgeber eine Tabelle ist, die die bestimmte Verzögerung basierend auf einem oder mehreren Eingabewerten bereitstellt,
*Senden* (403) der zweiten Nachricht an die drahtlose Vorrichtung (130) unter Verwendung der bestimmten Verzögerung, wobei die zweite Nachricht eine Antwort auf die Zugangsanforderung umfasst, wobei die zweite Nachricht ferner eine oder mehrere vierte Angaben für mindestens eines der Folgenden umfasst:
a) einen Zustand eines Funkkanals zwischen dem ersten Netzwerkknoten (111) und der drahtlosen Vorrichtung (130),
b) eine Last in einer ersten Zelle (121), die von dem ersten Netzwerkknoten (111) bedient wird,
c) eine Last im ersten Netzwerkknoten (111),
d) eine Fähigkeit des ersten Netzwerkknotens (111), und
e) eine Angabe einer maximalen Verzögerung durch die drahtlose Vorrichtung (130), um als Antwort auf die zweite Nachricht eine dritte Nachricht an den ersten Netzwerkknoten (111) zu senden, und
*Senden* (405) einer vierten Nachricht an einen zweiten Netzwerkknoten (112), wobei die vierte Nachricht eine dritte Angabe umfasst, dass die zweite Nachricht vom ersten Netzwerkknoten (111) an die drahtlose Vorrichtung (130) gesendet wurde, wobei der zweite Netzwerkknoten (112) ein Nachbarnetzwerkknoten ist.

2. Verfahren nach Anspruch 1, wobei der eine oder die mehreren Eingabewerte Folgendes umfassen:
a) einen Zustand eines Funkkanals zwischen dem ersten Netzwerkknoten (111) und der drahtlosen Vorrichtung (130),
b) eine Last in einer ersten Zelle (121), die von dem ersten Netzwerkknoten (111) bedient wird,
c) eine Last im ersten Netzwerkknoten (111),
d) eine zufällige Bestimmung,
e) eine oder mehrere Fähigkeiten der drahtlosen Vorrichtung (130),
f) eine Anzahl von ersten Nachrichten, die von der drahtlosen Vorrichtung (130) empfangen wurden,
g) eine erkannte fünfte Nachricht vom zweiten Netzwerkknoten (112), die die Zugangsanforderung zu einer zweiten Zelle (122) gewährt, die von dem zweiten Netzwerkknoten (112) bedient wird, und
h) eine erkannte sechste Nachricht, die von der drahtlosen Vorrichtung (130) an den zweiten Netzwerkknoten (112) gesendet wird und die der drahtlosen Vorrichtung die Zugangsanforderung zu der zweiten Zelle (122) gewährt hat, die vom zweiten Netzwerkknoten (112) bedient wird (130).

3. Verfahren nach Anspruch 1 oder 2, das ferner das Senden (400) von mindestens einer ersten Angabe, die der bestimmten Verzögerung zugeordnet ist, und einer zweiten Angabe, die der bestimmten Verzögerung zugeordnet ist, an die drahtlose Vorrichtung (130) umfasst, wobei die erste Angabe eine Angabe einer maximalen Verzögerung durch den ersten Netzwerkknoten (111) umfasst, um die zweite Nachricht zu senden, und wobei die zweite Angabe eine Angabe einer maximalen Verzögerung durch die drahtlose Vorrichtung (130) umfasst, um als Antwort auf die zweite Nachricht eine dritte Nachricht an den ersten Netzwerkknoten (111) zu senden.

4. Verfahren nach einem der Ansprüche 1 bis 3, das ferner Folgendes umfasst:
*Empfangen* (404) der dritten Nachricht von der drahtlosen Vorrichtung (130) an den ersten Netzwerkknoten (111) als Antwort auf die zweite Nachricht.

5. Verfahren, das von einer drahtlosen Vorrichtung (130) zum Empfangen einer Antwort von einem ersten Netzwerkknoten (111) auf eine Zugangsanforderung durchgeführt wird, wobei die drahtlose Vorrichtung (130) und der erste Netzwerkknoten (111) in einem drahtlosen Kommunikationsnetz arbeiten (100), wobei das Verfahren Folgendes umfasst:
*Erhalten* (501) einer ersten Angabe, die eine Verzögerung anzeigt, die von dem ersten Netzwerkknoten (111) zum Senden einer Antwort auf eine Zugangsanforderung verwendet wird,
*Empfangen* (503) einer zweiten Nachricht von dem ersten Netzwerkknoten (111), die die Antwort auf die Zugangsanforderung umfasst, die in einer ersten Nachricht enthalten ist, die von der drahtlosen Vorrichtung (130) gesendet wird, wobei das Empfangen (503) auf der Verzögerung basiert, wobei die zweite Nachricht eine oder mehrere vierte Angaben für mindestens eines der Folgenden umfasst:
a) einen Zustand eines Funkkanals zwischen dem ersten Netzwerkknoten (111) und der drahtlosen Vorrichtung (130),
b) eine Last in einer ersten Zelle (121), die von dem ersten Netzwerkknoten (111) bedient wird,
c) eine Last im ersten Netzwerkknoten (111),
d) eine Fähigkeit des ersten Netzwerkknotens (111), und
e) eine Angabe einer maximalen Verzögerung durch die drahtlose Vorrichtung (130), um als Antwort auf die zweite Nachricht eine dritte Nachricht an den ersten Netzwerkknoten (111) zu senden,
*Empfangen* (505), von einem zweiten Netzwerkknoten (112), einer fünften Nachricht, die die Zugangsanforderung zu einer zweiten Zelle (122) gewährt, die von dem zweiten Netzwerkknoten (112) bedient wird, wobei der zweite Netzwerkknoten (112) ein Nachbarnetzwerkknoten des ersten Netzwerkknotens ist, und
*Bestimmen* (506), ob i) eine dritte Nachricht an den ersten Netzwerkknoten (111) als Antwort auf die zweite Nachricht oder ii) eine sechste Nachricht an den zweiten Netzwerkknoten (112) als Antwort auf die fünfte Nachricht gesendet werden soll,
wobei das Bestimmen (506), ob die dritte Nachricht gesendet werden soll, auf mindestens einem der Folgenden basiert:
der einen oder den mehreren vierten Angaben, die in der empfangenen zweiten Nachricht vom ersten Netzwerkknoten (111) enthalten sind, und einer Empfangszeit der zweiten Nachricht, und
wobei das Bestimmen (506), ob die sechste Nachricht gesendet werden soll, auf mindestens einem der Folgenden basiert:
der einen oder den mehreren fünften Angaben, die in der empfangenen fünften Nachricht vom zweiten Netzwerkknoten (112) enthalten sind, und einer Empfangszeit der fünften Nachricht, wobei die eine oder die mehreren fünften Angaben für mindestens eines der Folgenden dienen:
einen Zustand eines Funkkanals zwischen dem zweiten Netzwerkknoten und der drahtlosen Vorrichtung,
eine Last in einer zweiten Zelle, die vom zweiten Netzwerkknoten bedient wird, und
eine Fähigkeit des zweiten Netzwerkknotens.

6. Verfahren nach Anspruch 5,wobei die erste Angabe eine Angabe einer maximalen Verzögerung durch den ersten Netzwerkknoten (111) umfasst, um die zweite Nachricht zu senden, wobei das Verfahren ferner Folgendes umfasst:
*Erhalten* (501) einer zweiten Angabe, die der Verzögerung zugeordnet ist und von dem ersten Netzwerkknoten (111) zum Senden einer Antwort auf eine Zugangsanforderung verwendet wird, wobei die zweite Angabe eine Angabe einer maximalen Verzögerung durch die drahtlose Vorrichtung (130) umfasst, um als Antwort auf die zweite Nachricht eine dritte Nachricht an den ersten Netzwerkknoten (111) zu senden,
*Senden* (502) der ersten Nachricht an den ersten Netzwerkknoten (111), und
*Senden* (504) einer dritten Nachricht an den ersten Netzwerkknoten (111) als Antwort auf die zweite Nachricht, wobei das Senden (504) der dritten Nachricht basierend auf der erhaltenen zweiten Angabe verzögert wird.

7. Computerprogramm, das Anweisungen umfasst, die, wenn sie auf mindestens einem Prozessor ausgeführt werden, den mindestens einen Prozessor veranlassen, das Verfahren nach einem der Ansprüche 1 bis 6 auszuführen.

8. Computerlesbares Speichermedium, auf dem ein Computerprogramm gespeichert ist, das Anweisungen umfasst, die, wenn sie auf mindestens einem Prozessor ausgeführt werden, den mindestens einen Prozessor veranlassen, das Verfahren nach einem der Ansprüche 1 bis 6 auszuführen.

9. Erster Netzwerkknoten (111), der dafür konfiguriert ist, eine Zugangsanforderung von einer drahtlosen Vorrichtung (130) zu bearbeiten, wobei der erste Netzwerkknoten (111) dafür konfiguriert ist, in einem drahtlosen Kommunikationsnetzwerk (100) zu arbeiten, wobei der erste Netzwerkknoten (111) ferner für Folgendes konfiguriert ist:
Empfangen einer ersten Nachricht von der drahtlosen Vorrichtung (130), die eine Zugangsanforderung umfasst,
Bestimmen einer Verzögerung zum Senden einer zweiten Nachricht an die drahtlose Vorrichtung (130) als Antwort auf die empfangene erste Nachricht durch Einstellen einer bestimmten Priorität in einem Scheduler des ersten Netzwerkknotens (111), wobei die Verzögerung basierend auf einem vorkonfigurierten Verzögerungszeitgeber bestimmt wird, undwobei der vorkonfigurierte Verzögerungszeitgeber eine Tabelle ist, die die bestimmte Verzögerung basierend auf einem oder mehreren Eingabewerten bereitstellt,
Senden der zweiten Nachricht an die drahtlose Vorrichtung (130) unter Verwendung der bestimmten Verzögerung, wobei die zweite Nachricht eine Antwort auf die Zugangsanforderung umfasst, wobei die zweite Nachricht eine oder mehrere vierte Angaben für mindestens eines der Folgenden umfasst:
a) einen Zustand eines Funkkanals zwischen dem ersten Netzwerkknoten (111) und der drahtlosen Vorrichtung (130),
b) eine Last in einer ersten Zelle (121), die von dem ersten Netzwerkknoten (111) bedient wird,
c) eine Last im ersten Netzwerkknoten (111),
d) eine Fähigkeit des ersten Netzwerkknotens (111), und
e) eine Angabe einer maximalen Verzögerung durch die drahtlose Vorrichtung (130), um als Antwort auf die zweite Nachricht eine dritte Nachricht an den ersten Netzwerkknoten (111) zu senden, und
Senden einer vierten Nachricht an einen zweiten Netzwerkknoten (112), wobei die vierte Nachricht eine dritte Angabe umfasst, dass die zweite Nachricht vom ersten Netzwerkknoten (111) an die drahtlose Vorrichtung (130) gesendet wurde, wobei der zweite Netzwerkknoten (112) ein Nachbarnetzwerkknoten ist.

10. Drahtlose Vorrichtung (130), die dafür konfiguriert ist, eine Antwort von einem ersten Netzwerkknoten (111) auf eine Zugangsanforderung zu empfangen, wobei die drahtlose Vorrichtung (130) dafür konfiguriert ist, in einem drahtlosen Kommunikationsnetzwerk (100) zu arbeiten, wobei die drahtlose Vorrichtung (130) ferner für Folgendes konfiguriert ist:
Erhalten einer ersten Angabe, die eine Verzögerung anzeigt, die dafür konfiguriert ist, von dem ersten Netzwerkknoten (111) zum Senden einer Antwort auf eine Zugangsanforderung verwendet zu werden,
Empfangen einer zweiten Nachricht von dem ersten Netzwerkknoten (111), die die Antwort auf die Zugangsanforderung umfasst, die in einer ersten Nachricht enthalten ist, die dafür konfiguriert ist, von der drahtlosen Vorrichtung (130) gesendet zu werden, um basierend auf der Verzögerung zu empfangen, wobei die zweite Nachricht eine oder mehrere vierte Angaben für mindestens eines der Folgenden umfasst:
a) einen Zustand eines Funkkanals zwischen dem ersten Netzwerkknoten (111) und der drahtlosen Vorrichtung (130),
b) eine Last in einer ersten Zelle (121), die von dem ersten Netzwerkknoten (111) bedient wird,
c) eine Last im ersten Netzwerkknoten (111),
d) eine Fähigkeit des ersten Netzwerkknotens (111), und
e) eine Angabe einer maximalen Verzögerung durch die drahtlose Vorrichtung (130), um als Antwort auf die zweite Nachricht eine dritte Nachricht an den ersten Netzwerkknoten (111) zu senden,
Empfangen, von einem zweiten Netzwerkknoten (112), einer fünften Nachricht, die die Zugangsanforderung zu einer zweiten Zelle (122) gewährt, die von dem zweiten Netzwerkknoten (112) bedient wird, wobei der zweite Netzwerkknoten (112) ein Nachbarnetzwerkknoten des ersten Netzwerkknotens ist, und
Bestimmen, ob i) eine dritte Nachricht an den ersten Netzwerkknoten (111) als Antwort auf die zweite Nachricht oder ii) eine sechste Nachricht an den zweiten Netzwerkknoten (112) als Antwort auf die fünfte Nachricht gesendet werden soll,
wobei das Bestimmen, ob die dritte Nachricht gesendet werden soll, auf mindestens einem der Folgenden basiert:
einen oder mehreren vierten Angaben, die in der empfangenen zweiten Nachricht vom ersten Netzwerkknoten (111) enthalten sind, und einer Empfangszeit der zweiten Nachricht, und
wobei das Bestimmen, ob die sechste Nachricht gesendet werden soll, auf Folgendem basiert:
der einen oder den mehreren fünften Angaben, die in der empfangenen fünften Nachricht vom zweiten Netzwerkknoten (112) enthalten sind, und/oder einer Empfangszeit der fünften Nachricht, wobei die eine oder die mehreren fünften Angaben für eines der Folgenden dienen: eine Bedingung eines Funkkanals zwischen dem zweiten Netzwerkknoten und der drahtlosen Vorrichtung, eine Last in einer zweiten Zelle, die von dem zweiten Netzwerkknoten bedient wird, und/oder eine Fähigkeit des zweiten Netzwerkknotens.

## Revendications

1. Procédé exécuté par un premier nœud de réseau (111) pour traiter une demande d'accès provenant d'un dispositif sans fil (130), le dispositif sans fil (130) et le premier nœud de réseau (111) fonctionnant dans un réseau de communication sans fil (100), le procédé comprenant :
*la réception* (401) d'un premier message à partir du dispositif sans fil (130) comprenant une demande d'accès,
*la détermination* (402) d'un retard pour envoyer un deuxième message au dispositif sans fil (130), en réponse au premier message, en définissant une certaine priorité dans un programmateur du premier nœud de réseau (111), dans lequel le retard est déterminé sur la base d'un retardateur préconfiguré,
et dans lequel le retardateur préconfiguré est une table qui fournit le retard déterminé sur la base d'une ou plusieurs valeurs d'entrée,
*l'envoi* (403) du deuxième message au dispositif sans fil (130) en utilisant ledit retard déterminé, le deuxième message comprenant une réponse à la demande d'accès, dans lequel le deuxième message comprend en outre une ou plusieurs quatrièmes indications pour au moins l'un des éléments suivants :
a) une condition d'un canal radio entre le premier nœud de réseau (111) et le dispositif sans fil (130),
b) une charge dans une première cellule (121) desservie par le premier nœud de réseau (111),
c) une charge dans le premier nœud de réseau (111),
d) une capacité du premier nœud de réseau (111), et
e) une indication d'un retard maximum par le dispositif sans fil (130) pour envoyer un troisième message au premier nœud de réseau (111) en réponse au deuxième message, et
*l'envoi* (405) d'un quatrième message à un deuxième nœud de réseau (112), le quatrième message comprenant une troisième indication que le deuxième message a été envoyé par le premier nœud de réseau (111) au dispositif sans fil (130), dans lequel le deuxième nœud de réseau (112) est un nœud de réseau voisin.

2. Procédé selon la revendication 1, dans lequel l'une ou plusieurs valeurs d'entrée comprennent :
a) une condition d'un canal radio entre le premier nœud de réseau (111) et le dispositif sans fil (130),
b) une charge dans une première cellule (121) desservie par le premier nœud de réseau (111),
c) une charge dans le premier nœud de réseau (111),
d) une détermination aléatoire,
e) une ou plusieurs capacités du dispositif sans fil (130),
f) un certain nombre de premiers messages reçus à partir du dispositif sans fil (130),
g) un cinquième message détecté provenant du deuxième nœud de réseau (112) accordant la demande d'accès à une deuxième cellule (122) desservie par le deuxième nœud de réseau (112), et
h) un sixième message détecté envoyé par le dispositif sans fil (130) au deuxième nœud de réseau (112) qui a accordé la demande d'accès à la deuxième cellule (122) desservie par le deuxième nœud de réseau (112) au dispositif sans fil (130) .

3. Procédé selon la revendication 1 ou 2, comprenant en outre l'envoi (400), au dispositif sans fil (130), d'au moins une parmi une première indication associée au retard déterminé et une deuxième indication associée au retard déterminé, dans lequel la première indication comprend une indication d'un retard maximum par le premier nœud de réseau (111) pour envoyer le deuxième message, et dans lequel la deuxième indication comprend une indication d'un retard maximum par le dispositif sans fil (130) pour envoyer un troisième message au premier nœud de réseau (111) en réponse au deuxième message.

4. Procédé selon l'une quelconque des revendications 1 à 3, comprenant en outre :
*la réception* (404) du troisième message à partir du dispositif sans fil (130) au premier nœud de réseau (111) en réponse au deuxième message.

5. Procédé exécuté par un dispositif sans fil (130) pour recevoir une réponse à partir d'un premier nœud de réseau (111) à une demande d'accès, le dispositif sans fil (130) et le premier nœud de réseau (111) fonctionnant dans un réseau de communication sans fil (100), le procédé comprenant :
*l'obtention* (501) d'une première indication indiquant un retard utilisé par le premier nœud de réseau (111) pour envoyer une réponse à une demande d'accès,
*la réception* (503), à partir du premier nœud de réseau (111), d'un deuxième message comprenant la réponse à la demande d'accès comprise dans un premier message envoyé par le dispositif sans fil (130), la réception (503) étant basée sur le retard, dans lequel le deuxième message comprend une ou plusieurs quatrièmes indications pour au moins l'un des éléments suivants :
a) une condition d'un canal radio entre le premier nœud de réseau (111) et le dispositif sans fil (130),
b) une charge dans une première cellule (121) desservie par le premier nœud de réseau (111),
c) une charge dans le premier nœud de réseau (111),
d) une capacité du premier nœud de réseau (111), et
e) une indication d'un retard maximum par le dispositif sans fil (130) pour envoyer un troisième message au premier nœud de réseau (111) en réponse au deuxième message,
*la réception* (505), à partir d'un deuxième nœud de réseau (112), d'un cinquième message accordant la demande d'accès à une deuxième cellule (122) desservie par le deuxième nœud de réseau (112), dans lequel le deuxième nœud de réseau (112) est un nœud de réseau voisin du premier nœud de réseau, et
*la détermination* (506) s'il faut envoyer l'un parmi : i) un troisième message au premier nœud de réseau (111) en réponse au deuxième message, ou ii) un sixième message au deuxième nœud de réseau (112) en réponse au cinquième message,
*la détermination* (506) s'il faut envoyer le troisième message sur la base d'au moins l'un des éléments suivants :
l'une ou plusieurs quatrièmes indications comprises dans le deuxième message reçu à partir du premier nœud de réseau (111) et un temps de réception du deuxième message, et
la détermination (506) s'il faut envoyer le sixième message sur la base d'au moins l'un des éléments suivants :
une ou plusieurs cinquièmes indications comprises dans le cinquième message reçu à partir du deuxième nœud de réseau (112), et un temps de réception du cinquième message, dans lequel l'une ou plusieurs cinquièmes indications sont pour au moins l'un des éléments suivants :
une condition d'un canal radio entre le deuxième nœud de réseau et le dispositif sans fil,
une charge dans une deuxième cellule desservie par le deuxième nœud de réseau, et
une capacité du deuxième nœud de réseau.

6. Procédé selon la revendication 5, dans lequel la première indication comprend une indication d'un retard maximum par le premier nœud de réseau (111) pour envoyer le deuxième message, le procédé comprenant en outre :
*l'obtention* (501) d'une deuxième indication associée au retard utilisé par le premier nœud de réseau (111) pour envoyer une réponse à une demande d'accès, dans lequel la deuxième indication comprend une indication d'un retard maximum par le dispositif sans fil (130) pour envoyer un troisième message au premier nœud de réseau (111) en réponse au deuxième message, *l'envoi* (502) du premier message au premier nœud de réseau (111), et
*l'envoi* (504), au premier nœud de réseau (111), d'un troisième message en réponse au deuxième message, l'envoi (504) du troisième message étant retardé sur la base de la deuxième indication obtenue.

7. Programme informatique comprenant des instructions qui, lorsqu'elles sont exécutées sur au moins un processeur, amènent l'au moins un processeur à exécuter le procédé selon l'une quelconque des revendications 1 à 6.

8. Support de stockage lisible par ordinateur, sur lequel est stocké un programme informatique comprenant des instructions qui, lorsqu'elles sont exécutées sur au moins un processeur, amènent ledit au moins un processeur à exécuter le procédé selon l'une quelconque des revendications 1 à 6.

9. Premier nœud de réseau (111) configuré pour gérer une demande d'accès à partir d'un dispositif sans fil (130), le premier nœud de réseau (111) étant configuré pour fonctionner dans un réseau de communication sans fil (100), le premier nœud de réseau (111) étant en outre configuré pour :
recevoir un premier message à partir du dispositif sans fil (130) comprenant une demande d'accès,
déterminer un retard pour envoyer un deuxième message au dispositif sans fil (130), en réponse au premier message reçu, en définissant une certaine priorité dans un programmateur du premier nœud de réseau (111), dans lequel le retard est déterminé sur la base d'un retardateur préconfiguré, et dans lequel le retardateur préconfiguré est une table qui fournit le retard déterminé sur la base d'une ou plusieurs valeurs d'entrée,
envoyer le deuxième message au dispositif sans fil (130) en utilisant ledit retard déterminé, le deuxième message comprenant une réponse à la demande d'accès, dans lequel le deuxième message comprend une ou plusieurs quatrièmes indications pour au moins l'un des éléments suivants :
a) une condition d'un canal radio entre le premier nœud de réseau (111) et le dispositif sans fil (130),
b) une charge dans une première cellule (121) desservie par le premier nœud de réseau (111),
c) une charge dans le premier nœud de réseau (111),
d) une capacité du premier nœud de réseau (111), et
e) une indication d'un retard maximum par le dispositif sans fil (130) pour envoyer un troisième message au premier nœud de réseau (111) en réponse au deuxième message, et
envoyer un quatrième message à un deuxième nœud de réseau (112), le quatrième message comprenant une troisième indication que le deuxième message a été envoyé par le premier nœud de réseau (111) au dispositif sans fil (130), dans lequel le deuxième nœud de réseau (112) est un nœud de réseau voisin.

10. Dispositif sans fil (130) configuré pour recevoir une réponse à partir d'un premier nœud de réseau (111) à une demande d'accès, le dispositif sans fil (130) étant configuré pour fonctionner dans un réseau de communication sans fil (100), le dispositif sans fil (130) étant en outre configuré pour :
obtenir une première indication indiquant un retard configuré pour être utilisé par le premier nœud de réseau (111) pour envoyer une réponse à une demande d'accès, et
recevoir, à partir du premier nœud de réseau (111), un deuxième message comprenant la réponse à la demande d'accès comprise dans un premier message configuré pour être envoyé par le dispositif sans fil (130), à recevoir sur la base du retard, dans lequel le deuxième message comprend une ou plusieurs quatrièmes indications pour au moins l'un des éléments suivants :
a) une condition d'un canal radio entre le premier nœud de réseau (111) et le dispositif sans fil (130),
b) une charge dans une première cellule (121) desservie par le premier nœud de réseau (111),
c) une charge dans le premier nœud de réseau (111),
d) une capacité du premier nœud de réseau (111), et
e) une indication d'un retard maximum par le dispositif sans fil (130) pour envoyer un troisième message au premier nœud de réseau (111) en réponse au deuxième message,
recevoir à partir d'un deuxième nœud de réseau (112), un cinquième message accordant la demande d'accès à une deuxième cellule (122) desservie par le deuxième nœud de réseau (112),
dans lequel le deuxième nœud de réseau (112) est un nœud de réseau voisin du premier nœud de réseau, et
déterminer s'il faut envoyer l'un parmi : i) un troisième message au premier nœud de réseau (111) en réponse au deuxième message, ou ii) un sixième message au deuxième nœud de réseau (112) en réponse au cinquième message,
la détermination s'il faut envoyer le troisième message étant basé sur au moins l'un des éléments suivants :
une ou plusieurs quatrièmes indications comprises dans le deuxième message reçu à partir du premier nœud de réseau (111) et un temps de réception du deuxième message, et
la détermination s'il faut envoyer le sixième message étant basée sur au moins l'un des éléments suivants :
une ou plusieurs cinquièmes indications comprises dans le cinquième message reçu à partir du deuxième nœud de réseau (112), et un temps de réception du cinquième message, dans lequel l'une ou plusieurs cinquièmes indications sont pour au moins l'un des éléments suivants : une condition d'un canal radio entre le deuxième nœud de réseau et le dispositif sans fil, une charge dans une deuxième cellule desservie par le deuxième nœud de réseau, et une capacité du deuxième nœud de réseau.
